# EUROPÄISCHE PATENTSCHRIFT

(11) **EP 3 827 178 B1**
(45) Veröffentlichungstag und Bekanntmachung des Hinweises auf die Patenterteilung: **28.02.2024**
(21) Anmeldenummer: 20792926.6
(22) Anmeldetag: 30.09.2020
(51) Int. Cl.: F16B 21/16

(54) **VERSCHLUSSVORRICHTUNG MIT ANEINANDER ANSETZBAREN VERSCHLUSSTEILEN**
FASTENING APPARATUS COMPRISING FASTENING PARTS WHICH CAN BE PLACED AGAINST ONE ANOTHER
APPAREIL DE FIXATION COMPRENANT DES PIÈCES DE FIXATION POUVANT ÊTRE PLACÉES L'UNE CONTRE L'AUTRE

(30) Priorität: 02.10.2019 DE 102019215277
(43) Veröffentlichungstag der Anmeldung: 02.06.2021
(73) Patentinhaber: Fidlock GmbH, 30659 Hannover (DE)
(72) Erfinder: BÜTTNER, Heiko, 30659 Hannover (DE); HILLER, Lasse, 30952 Ronnenberg (DE); BOTKUS, Breido, 30175 Hannover (DE); FIEDLER, Joachim, 30519 Hannover (DE)
(74) Vertreter: Maikowski & Ninnemann Patentanwälte Partnerschaft mbB
(86) Internationale Anmeldenummer: PCT/EP2020/077328
(87) Internationale Veröffentlichungsnummer: WO 2021/064002

(56) Entgegenhaltungen:
- EP-A1- 1 085 959
- EP-A2- 0 970 628
- WO-A1-2018/073064
- DE-A1- 2 656 511
- US-B1- 6 295 702

## Beschreibung

Die Erfindung betrifft eine Verschlussvorrichtung nach dem Oberbegriff des Anspruchs 1.

Eine derartige Verschlussvorrichtung umfasst ein einen Körper aufweisendes erstes Verschlussteil und ein zweites Verschlussteil, die zum Schließen der Verschlussvorrichtung entlang einer Schließrichtung aneinander ansetzbar und in einer Schließstellung miteinander verbunden sind. Die Verschlussvorrichtung weist weiter zumindest ein Verriegelungselement auf, das verstellbar an dem Körper des ersten Verschlussteils angeordnet ist. An dem zweiten Verschlussteil ist zumindest ein Eingriffsabschnitt geformt. In der Schließstellung stehen das zumindest eine Verriegelungselement und der zumindest eine Eingriffsabschnitt derart miteinander in Eingriff, dass das erste Verschlussteil und das zweite Verschlussteile miteinander verriegelt sind.

Eine solche Verschlussvorrichtung dient generell zum Verbinden zweier Baugruppen miteinander. Eine solche Verschlussvorrichtung kann zum Beispiel an einem elektronischen Gerät, zum Beispiel einem Mobiltelefon oder Tablet-Computer, verwendet werden, um das elektronische Gerät an einer übergeordneten Baugruppe (lösbar) festzulegen, zum Beispiel an einem Armaturenbrett eines Fahrzeugs oder dergleichen. Eine solche Verschlussvorrichtung kann zum Beispiel aber auch an einem Fahrrad zum Befestigen eines Gegenstands, zum Beispiel einer Trinkflasche, an einem Fahrradrahmen oder einem Gepäckhalter Verwendung finden. Eine solche Verschlussvorrichtung kann zum Beispiel auch verwendet werden, um Gegenstände an einem Robotergreifer festzulegen.

Eine solche Verschlussvorrichtung soll in der Schließstellung eine feste, belastbare Verbindung der Verschlussteile miteinander herstellen. Die Verbindung soll hierbei in einfacher, komfortabler Weise lösbar sein, um einem Nutzer das Trennen der zugeordneten Baugruppen voneinander zu ermöglichen.

Bei einer aus der US 6,182,336 bekannten Verschlussvorrichtung ist ein sogenanntes Male-Teil an ein sogenanntes Female-Teil anzusetzen. An dem Male-Teil ist ein Magnet angeordnet, der beim steckenden Verbinden mit einem scheibenförmigen Verriegelungselement an dem Female-Teil wechselwirkt, um das Male-Teil und das Female-Teil in einer Schließstellung miteinander zu verriegeln.

Die US 6,295,702 beschreibt eine magnetische Verschlussvorrichtung, bei der ein Male-Teil und ein Female-Teil manuell voneinander separiert werden können. Das Female-Teil weist eine innere Kammer auf, die ein Magnet aufweist. Das Male-Teil weist ein Vorsprungselement auf, das aus einem ferromagnetischen Material geformt ist und das durch eine Öffnung in die Kammer eingeführt werden kann. Mittels eines Verriegelungselements kann das Male-Teil zu dem Female-Teil verriegelt werden.

Aufgabe der vorliegenden Erfindung ist es, eine Verschlussvorrichtung zur Verfügung zu stellen, die in einer Schließstellung eine feste, belastbare Verbindung zwischen den Verschlussteilen herstellt, dabei aber einfach und komfortabel lösbar ist.

Diese Aufgabe wird durch einen Gegenstand mit den Merkmalen des Anspruchs 1 gelöst.

Demnach weisen das erste Verschlussteil eine erste Magneteinrichtung und das zweite Verschlussteil eine zweite Magneteinrichtung auf. Die erste Magneteinrichtung und die zweite Magneteinrichtung wirken bei Ansetzen des ersten Verschlussteils und des zweiten Verschlussteils aneinander magnetisch anziehend zusammen. Das zumindest eine Verriegelungselement ist dabei derart magnetisch ausgebildet, dass das zumindest eine Verriegelungselement in der Schließstellung durch die erste Magneteinrichtung und/oder die zweite Magneteinrichtung in Richtung eines Eingriffs mit dem zumindest einen Eingriffsabschnitt belastet ist. Das erste Verschlussteil weist ein Verstellteil und ein mit dem Verstellteil wirkverbundenes, um eine Drehachse drehbares Wirkelement aufweist, wobei das Verstellteil durch Verdrehen des Wirkelements in eine Betätigungsrichtung betätigbar ist, um das zumindest eine Verriegelungselement zum Lösen des ersten Verschlussteils und des zweiten Verschlussteils voneinander außer Eingriff von dem zumindest einen Eingriffsabschnitt zu bringen.

Die Verschlussvorrichtung ist somit als magnetische Verschlussvorrichtung ausgebildet. An dem ersten Verschlussteil und an dem zweiten Verschlussteil ist jeweils eine Magneteinrichtung angeordnet, beispielsweise jeweils ausgebildet durch einen Permanentmagneten oder an einem Verschlussteil durch einen Permanentmagneten und am anderen Verschlussteil durch einen magnetischen Anker aus einem ferromagnetischen Material. Die Magneteinrichtungen wirken derart magnetisch zusammen, dass bei Ansetzen der Verschlussteile aneinander die Verschlussteile auf einander zu und in Eingriff miteinander gezogen werden und somit das Schließen der Verschlussvorrichtung magnetisch unterstützt wird.

Die Magneteinrichtungen dienen hierbei auch zum Herstellen der Verriegelung zwischen dem ersten Verschlussteil und dem zweiten Verschlussteil in der Schließstellung.

So ist - zusätzlich zur ersten Magneteinrichtung am ersten Verschlussteil und zur zweiten Magneteinrichtung am zweiten Verschlussteil - das zumindest eine Verriegelungselement magnetisch ausgebildet, beispielsweise indem das zumindest eine Verriegelungselement ganz oder teilweise aus einem ferromagnetischen Material gefertigt oder permanentmagnetisch ausgebildet ist, sodass das zumindest eine Verriegelungselement magnetisch mit der ersten Magneteinrichtung des ersten Verschlussteils und/oder der zweiten Magneteinrichtung des zweiten Verschlussteils zusammenwirkt.

Das magnetische Zusammenwirken ist hierbei insbesondere derart, dass in der Schließstellung das zumindest eine Verriegelungselement aufgrund der magnetischen Wechselwirkung in Eingriff mit dem zugeordneten Eingriffsabschnitt gezogen wird . In der Schließstellung greift das zumindest eine Verriegelungselement des ersten Verschlussteils somit in den zugeordneten Eingriffsabschnitt am zweiten Verschlussteil ein, sodass dadurch eine Verriegelung zwischen dem ersten Verschlussteil und dem zweiten Verschlussteil hergestellt ist. Die Verriegelung wird aufgrund der magnetischen Wechselwirkung gehalten, sodass die Verschlussteile in der Schließstellung fest und belastbar miteinander verbunden sind.

Beispielsweise wird das zumindest eine Verriegelungselement des ersten Verschlussteils in der Schließstellung durch die zweite Magneteinrichtung des zweiten Verschlussteils magnetisch angezogen und in Eingriff mit dem Eingriffsabschnitt des zweiten Verschlussteils gebracht. Aufgrund der magnetischen Wechselwirkung zwischen dem magnetischen Verriegelungselement und dem zweiten Verschlussteil wird somit bei Schließen der Verschlussvorrichtung die Verriegelung selbsttätig hergestellt, sodass die Verschlussteile in der Schließstellung fest und belastbar aneinander gehalten sind.

Durch Einwirken auf das zumindest eine Verriegelungselement kann die Verriegelung - entgegen der Magnetwirkung - aufgehoben werden, sodass die Verschlussteile voneinander getrennt werden können. Dadurch, dass das zumindest eine Verriegelungselement außer Eingriff von dem zugeordneten Eingriffsabschnitt gebracht wird, können die Verschlussteile somit voneinander gelöst und die Verschlussvorrichtung geöffnet werden.

Das Verstellen des Verriegelungselements erfolgt hierbei über ein Verstellteil, das mit dem Verriegelungselement wirkverbunden ist. Das Verstellteil ist mit einem Wirkelement gekoppelt, sodass durch Betätigen des Wirkelements das Verstellteil in eine Betätigungsrichtung relativ zum Körper des ersten Verschlussteils betätigt werden kann, um auf diese Weise das Verriegelungselement mitzunehmen und zum Lösen des ersten Verschlussteils und des zweiten Verschlussteils voneinander außer Eingriff von dem zugeordneten Eingriffsabschnitt zu bringen.

Das Wirkelement ist hierbei zu dem Körper des ersten Verschlussteils drehbar und dazu beispielsweise drehbar an dem Körper gelagert. Das Wirkelement ist derart mit dem Verstellteil wirkverbunden, dass bei einem Verdrehen des Wirkelements um eine zugeordnete Drehachse das Verstellteil unter Kraftumlenkung in eine vorzugsweise lineare Betätigungsrichtung betätigt wird und dadurch das Verrieglungselement mitgenommen und außer Eingriff von dem Eingriffsabschnitt gebracht wird.

Es ergibt sich eine einfache, komfortable Betätigung der Verschlussvorrichtung zum Lösen der Verschlussteile voneinander. Das Verstellen des Wirkelements kann haptisch angenehm erfolgen, wobei das Wirkelement beispielsweise auch über ein zusätzliches Betätigungselement, mit dem das Wirkelement in Getriebeverbindung steht, erfolgen kann, sodass die Betätigung zum Lösen der Verschlussvorrichtung weiter vereinfacht ist.

In einer Ausgestaltung weist das erste Verschlussteil oder das zweite Verschlussteil eine Eingriffsöffnung auf, in die zum Schließen der Verschlussvorrichtung ein zum Beispiel zapfenförmiges Eingriffselement des jeweils anderen Verschlussteils eingeführt werden kann. Eines der Verschlussteile ist somit als Female-Teil (mit einer Eingriffsöffnung) ausgebildet, während das andere der Verschlussteile als Male-Teil (mit einem Eingriffselement) gestaltet ist. Das zumindest eine Verriegelungselement kann an dem Female-Teil und der zumindest eine Eingriffsabschnitt entsprechend an dem Male-Teil angeordnet sein. Umgekehrt ist aber auch denkbar möglich, dass das zumindest eine Verriegelungselement an dem Male-Teil angeordnet ist, während der zumindest eine Eingriffsabschnitt an dem Female-Teil geformt ist.

In einer Ausgestaltung ist das zumindest eine Verriegelungselement in einer Ebene, die durch die Schließrichtung und eine quer zur Schließrichtung (und quer zu einer Längsrichtung, entlang derer das zumindest eine Verriegelungselement längserstreckt ist) erstreckte Querrichtung aufgespannt ist, linear verstellbar. Alternativ kann das zumindest eine Verriegelungselement auch in der durch die Schließrichtung und die Querrichtung aufgespannten Ebene verschwenkbar sein. Jeweils ist das zumindest eine Verriegelungselement an dem ersten Verschlussteil verstellbar, um in einer ersten Stellung in den zumindest einen Eingriffsabschnitt des zweiten Verschlussteils einzugreifen und die Verschlussteile somit in der Schließstellung miteinander zu verriegeln. Aus dieser ersten Stellung ist das zumindest eine Verriegelungselement verstellbar, um die Verriegelung aufzuheben und die Verschlussteile somit in einfacher Weise voneinander lösen zu können.

In einer Ausgestaltung ist die Drehachse, um die das Wirkelement zu dem Körper des ersten Verschlussteils zu verdrehen ist, entlang der Schließrichtung gerichtet.

Die Betätigungsrichtung, entlang derer das Verstellteil zum Lösen der Verschlussteile voneinander bewegbar ist, kann entlang der Drehachse gerichtet sein. Bei einem Verdrehen des Wirkelements um die Drehachse erfolgt somit unter Kraftumlenkung ein Verstellen des Verstellteils entlang der Drehachse.

In einer Ausgestaltung weist das Wirkelement eine Führungseinrichtung auf, an der das Verstellteil derart geführt ist, dass das Verstellteil bei Verdrehen des Wirkelements in die Betätigungsrichtung betätigt wird. Die Führungseinrichtung kann insbesondere eine Kraftumlenkung bereitstellen, sodass eine Drehbewegung des Wirkelements in eine vorzugsweise linear gerichtete Verstellbewegung des Verstellteils umgesetzt wird. Die Führungseinrichtung kann beispielsweise durch eine Kulissenführung geschaffen sein, in die ein an dem Verstellteil geformtes Führungselement, zum Beispiel in Form eines Führungszapfens, eingreift, sodass bei einem Verdrehen des Wirkelements das Verstellteil entlang der Betätigungsrichtung bewegt wird. Alternativ kann die Führungseinrichtung auch durch eine Anordnung von einer oder mehreren Auflaufschrägen geformt sein, auf die ein an dem Verstellteil geformtes Führungselement, zum Beispiel in Form eines Führungszapfens, aufläuft, wenn das Wirkelement um seine Drehachse verdreht wird.

Beispielsweise kann das Verstellteil zwei Führungselemente an einander gegenüberliegenden Abschnitten aufweisen, die jeweils in eine zugeordnete Kulissenführung am Wirkelement eingreifen, sodass das Verstellteil an zwei Kulissenführungen des Wirkelements geführt ist.

Das zumindest eine Verriegelungselement ist vorzugsweise in einer Aufnahmeöffnung am Körper des ersten Verschlussteils aufgenommen und in dieser Aufnahmeöffnung verstellbar. Die Aufnahmeöffnung kann eine Führung für das zumindest eine Verriegelungselement vorgeben, um eine lineare Verstellbewegung oder eine Schwenkbewegung des zumindest einen Verrieglungselements an dem Körper des ersten Verschlussteils zu definieren.

In einer Ausgestaltung ist die Aufnahmeöffnung derart schräg zur Schließrichtung und zur Querrichtung erstreckt, dass das zumindest eine Verriegelungselement entlang einer schräg zur Schließrichtung und schräg zur Querrichtung erstreckten Verstellrichtung in der Aufnahmeöffnung verstellbar ist. In diesem Fall ist das zumindest eine Verriegelungselement linear an dem Körper des ersten Verschlussteils verstellbar. Die Verstellrichtung ist hierbei schräg zur Schließrichtung erstreckt, sodass das zumindest eine Verriegelungselement schräg zur Schließrichtung in Eingriff mit oder außer Eingriff von dem zumindest einen Eingriffsabschnitt gebracht werden kann.

Die schräge Ausrichtung der Aufnahmeöffnung kann derart sein, dass bei einem Ansetzen der Verschlussteile aneinander das zumindest eine Verriegelungselement selbsttätig in der Aufnahmeöffnung ausweichen kann. So kann bei einem Einwirken des Eingriffselements des zweiten Verschlussteils auf das zumindest eine Verriegelungselement das zumindest eine Verriegelungselement in der schräg zur Schließrichtung geneigten Aufnahmeöffnung so verschoben werden, dass das Eingriffselement an dem zumindest einen Verriegelungselement entlang bewegt und das zumindest eine Verriegelungselement in Eingriff mit dem zumindest einen Eingriffsabschnitt an dem Eingriffselement gebracht werden kann.

In einer Ausgestaltung ist das zumindest eine Verrieglungselement an dem Verstellteil angeordnet und wird somit bei einem Bewegen des Verstellteils mitgenommen, sodass das Verrieglungselement durch Betätigen des Verstellteils zum Lösen der Verbindung zwischen den Verschlussteilen außer Eingriff von dem Eingriffsabschnitt gebracht werden kann. Das Verstellteil kann beispielsweise auf Enden des zumindest einen Verriegelungselements einwirken, um durch Verstellen des Verstellteils das zumindest eine Verriegelungselement außer Eingriff von dem zumindest einen Eingriffsabschnitt des zweiten Verschlussteils zu bringen. Durch Verstellen des Verstellteils wird das zumindest eine Verriegelungselement somit so bewegt, dass das Verriegelungselement außer Eingriff von dem zumindest einen Eingriffsabschnitt des zweiten Verschlussteils gebracht wird.

Das zumindest eine Verriegelungselement kann in einer Lageröffnung des Verstellteils an dem Verstellteil aufgenommen sein, wobei die Lageröffnung derart geformt ist, dass das Verrieglungselement quer zur Schließrichtung in der Lageröffnung bewegbar und somit zu dem Verstellteil verstellbar ist.

Der Eingriffsabschnitt weist eine schräg zur Schließrichtung erstreckte, erste Schrägfläche auf, und das erste Verschlussteil weist zum Beispiel im Bereich der Aufnahmeöffnung eine schräg zur Schließrichtung erstreckte, zweite Schrägfläche auf. In der Schließstellung ist das zumindest eine Verriegelungselement zwischen der ersten Schrägfläche und der zweiten Schrägfläche angeordnet, sodass darüber eine Verriegelung zwischen dem ersten Verschlussteil und dem zweiten Verschlussteil hergestellt ist.

Die Verriegelung zwischen dem ersten Verschlussteil und dem zweiten Verschlussteil wirkt insbesondere entlang der Schließrichtung derart, dass das erste Verschlussteil und das zweite Verschlussteil entlang der Schließrichtung aneinander gehalten und somit nicht entlang der Schließrichtung ohne weiteres, jedenfalls nicht ohne Lösen der Verriegelung, voneinander lösbar sind. Werden die Verschlussteile entlang der Schließrichtung zueinander belastet, werden Kräfte über die Schrägflächen in das zumindest eine Verriegelungselement eingeleitet, wobei die Winkelstellung der Schrägflächen zueinander die Stärke und Festigkeit der Verriegelung bestimmt.

In einer ersten Ausgestaltung sind die erste Schrägfläche und die zweite Schrägfläche in einer durch die Schließrichtung und die Querrichtung aufgespannten Ebene parallel zueinander erstreckt. Dies bewirkt, dass bei einer Belastung der Verschlussteile zueinander in der Schließstellung das zumindest eine Verriegelungselement zwischen parallel miteinander gerichteten Ebenen verklemmt wird und somit eine Verriegelung zwischen den Verschlussteilen herstellt. Bei einer Belastung können sich die Verschlussteile mit einem gewissen Spiel zueinander bewegen. Es ist denkbar, dass bei Überschreiten einer Grenzkraft sich die Verriegelung selbsttätig löst und die

Verschlussteile somit voneinander getrennt werden können (z.B. wenn sich durch ein Spiel zwischen Eingriffselement und Eingriffsöffnung unter Last das Eingriffselement verkippt und die Schrägflächen nicht mehr exakt parallel zueinander ausgerichtet sind).

In alternativer Ausgestaltung kann der Winkel zwischen den Schrägflächen größer Null sein. In der durch die Schließrichtung und die Querrichtung aufgespannten Ebene beschreiben die Schrägfläche somit einen Winkel zueinander, der größer Null ist. Hierunter ist zu verstehen, dass sich die lichte Weite zwischen den Schrägflächen nach außen hin, also weg von dem Eingriffsabschnitt, weitet, die Schrägflächen also eine nach außen sich weitende Keilform beschreiben. Eine solche winklige Anordnung der Schrägflächen zueinander hat die Wirkung, dass die Verschlussteile in der Schließstellung zumindest näherungsweise spielfrei zueinander gehalten werden. Wirken zum Beispiel Vibrationskräfte zwischen den Verschlussteilen, hat dies die Wirkung, dass das zumindest eine Verriegelungselement tiefer in Eingriff mit dem zumindest einen Eingriffsabschnitt gezogen wird, sodass die Verschlussteile spielfrei miteinander in Eingriff gedrückt werden. Bei Überschreiten einer gewissen Grenzkraft können die Verschlussteile sich hierbei selbsttätig voneinander lösen, unter selbsttätiger Aufhebung der Verriegelung.

In wiederum alternativer Ausgestaltung ist der Winkel zwischen den Schrägflächen kleiner Null. Die Schrägflächen beschreiben somit in der durch die Schließrichtung und die Querrichtung aufgespannten Ebene einen solchen Winkel zueinander, dass sich die lichte Weite zwischen den Schrägflächen nach außen hin, also weg von dem zumindest einen Eingriffsabschnitt, verkleinert. Die Schrägflächen beschreiben somit miteinander eine Keilform, die sich nach außen hin zuspitzt. Eine auf diese Weise winklige Anordnung der Schrägflächen zueinander hat die Wirkung, dass die Verbindung zwischen den Verschlussteilen in der Schließstellung selbstsichernd ist. Bei Belastung zwischen den Verschlussteilen wird das zumindest eine Verriegelungselement derart zwischen den Schrägflächen verkeilt, dass das zumindest eine Verriegelungselement tiefer in Eingriff mit dem zumindest einen Eingriffsabschnitt belastet wird und die Verbindung zwischen dem zumindest einen Verriegelungselement und dem Eingriffsabschnitt sich somit stabilisiert. Bei Belastung kann hierbei ein gewisses Spiel zwischen den Verschlussteilen auftreten.

In einer Ausgestaltung ist das zumindest eine Verriegelungselement als längserstrecktes Stabelement ausgebildet. In der Schließstellung ist das zumindest eine Verriegelungselement in Eingriff mit dem zugeordneten Eingriffsabschnitt. Zum Lösen der Verschlussteile voneinander kann das zumindest eine Verriegelungselement beispielsweise schräg zur Schließrichtung in der zugeordneten Aufnahmeöffnung am Körper des ersten Verschlussteils bewegt werden, um das zumindest eine Verriegelungselement außer Eingriff von dem zugeordneten Eingriffsabschnitt zu bringen.

Alternativ kann das zumindest eine Verriegelungselement beispielsweise ringförmig ausgebildet sein, wobei das zumindest eine Verriegelungselement in diesem Fall umfänglich um die Schließrichtung erstreckt und dabei umfänglich geschlossen oder umfänglich an einem Ort geöffnet (also als geöffneter Ring ausgebildet) ist. In der Schließstellung ist das zumindest eine Verriegelungselement in Eingriff mit einem zum Beispiel umlaufend um die Schließrichtung an einem Eingriffselement des zweiten Verschlussteils geformten Eingriffsabschnitt. Zum Lösen der Verbindung der Verschlussteile voneinander kann das zumindest eine Verriegelungselement verstellt werden, beispielsweise indem der Radius des ringförmigen Verrieglungselements geweitet und das Verriegelungselement somit außer Eingriff von dem zugeordneten Eingriffsabschnitt des zweiten Verschlussteils gebracht wird. Das Verriegelungselement ist in diesem Fall somit vorteilhafterweise zumindest abschnittsweise elastisch ausgebildet.

In einer Ausgestaltung ist die erste Magneteinrichtung des ersten Verschlussteils an dem Wirkelement angeordnet und gemeinsam mit dem Wirkelement verdrehbar. Dies kann insbesondere zur Folge haben, dass durch Verdrehen des Wirkelements auch die magnetischen Anziehungskräfte zwischen dem ersten Verschlussteil und dem zweiten Verschlussteil beeinflusst, insbesondere abgeschwächt werden können, sodass durch Betätigen des Wirkelements nicht nur die Verriegelung gelöst, sondern auch der magnetische Halt zwischen den Verschlussteilen abgeschwächt und gegebenenfalls sogar in eine Abstoßung umgedreht wird. Dies kann das Lösen der Verschlussteile voneinander weiter unterstützen.

Das erste Verschlussteil kann beispielsweise lediglich ein Verriegelungselement aufweisen. In einer Ausgestaltung weist das erste Verschlussteil jedoch zwei (oder mehr) Verriegelungselemente auf. Sind zwei Verriegelungselemente an dem ersten Verschlussteil vorgesehen, sind die Verriegelungselemente beispielsweise beidseitig einer an dem ersten Verschlussteil geformten Eingriffsöffnung angeordnet und können somit beidseitig mit dem Eingriffselement des zweiten Verschlussteils und daran geformten Eingriffsabschnitten wechselwirken, um eine zweiseitige Verriegelung in der Schließstellung herzustellen.

In einer Ausgestaltung ist das zweite Verschlussteil als starres Element mit einer Basis und einem integral an der Basis geformten, starren Eingriffselement nach Art eines Zapfens zum Eingriff in eine zugeordnete Eingriffsöffnung des ersten Verschlussteils ausgestaltet. An dem Eingriffselement kann, in einer Ausgestaltung, die zweite Magneteinrichtung des zweiten Verschlussteils angeordnet sein, sodass bei Ineingriffbringen des Eingriffselements mit der Eingriffsöffnung das erste Verschlussteil und das zweite Verschlussteil magnetisch anziehend zusammenwirken und selbsttätig in Eingriff miteinander gezogen werden. Ein oder mehrere Eingriffsabschnitte können hierbei an dem Eingriffselement des zweiten Verschlussteils geformt sein, sodass in der Schließstellung der Verschlussvorrichtung ein oder mehrere Verriegelungselemente des ersten Verschlussteils in verriegelndem Eingriff mit dem zweiten Verschlussteil stehen.

Eine Verschlussbaugruppe kann beispielsweise eine Mehrzahl von Verschlussvorrichtungen der vorangehend beschriebenen Art aufweisen. Beispielsweise kann die Verschlussbaugruppe eine erste Befestigungseinheit und eine zweite Befestigungseinheit aufweisen, wobei die erste Befestigungseinheit eine Mehrzahl von ersten Verschlussteilen der Mehrzahl von Verschlussvorrichtungen und die zweite Befestigungseinheit eine Mehrzahl von zweiten Verschlussteilen der Mehrzahl von Verschlussvorrichtungen aufweist. Die Befestigungseinheiten können aneinander angesetzt werden und sind in einer verbundenen Stellung über die Verschlussvorrichtungen mechanisch fest miteinander verbunden, wobei das Ansetzen der Befestigungseinheiten aneinander durch die Magneteinrichtungen der Verschlussvorrichtungen magnetisch unterstützt wird.

Die Verschlussvorrichtungen der Verschlussbaugruppe können zum Beispiel jeweils ein gesondertes Wirkelement aufweisen. Denkbar ist aber auch, dass die Verschlussvorrichtungen ein gemeinsames, um eine gemeinsame Drehachse drehbares Wirkelement aufweisen, sodass an den Verschlussvorrichtungen keine gesonderten Wirkelemente vorhanden sind, sondern die Wirkelemente der Verschlussvorrichtungen integral und einstückig durch ein gemeinsames Element ausgebildet sind.

Durch Betätigen der gesonderten Wirkelemente oder des gemeinsamen Wirkelements der Verschlussvorrichtungen können die Verschlussvorrichtungen geöffnet und somit die Befestigungseinheiten voneinander gelöst werden, sodass die Befestigungseinheiten getrennt und voneinander abgenommen werden können.

In einer Ausgestaltung weist die erste Befestigungseinheit ein Betätigungselement auf, das beispielsweise als Schieber ausgestaltet und zum Beispiel linear verschiebbar an einem Gehäuseteil der ersten Befestigungseinheit gelagert ist. Das Betätigungselement ist über eine Getriebeverbindung mit dem Wirkelement eines jeden ersten Verschlussteils der Verschlussvorrichtungen verbunden derart, dass durch Betätigen des Betätigungselements das Wirkelement verstellbar ist. Weisen die Verschlussvorrichtungen gesonderte Wirkelemente auf, ist das Betätigungselement mit den Wirkelementen derart gekoppelt, dass durch Verstellen des Betätigungselements die Wirkelemente gemeinsam verstellbar sind. Weisen die Verschlussvorrichtungen ein gemeinsames Wirkelement zum Verstellen der Verstellteile der Verschlussvorrichtungen auf, kann durch Betätigen des Betätigungselements das gemeinsame Wirkelement verdreht werden. Das Betätigungselement ermöglicht somit ein gemeinsames Betätigen zum Öffnen der einzelnen Verschlussvorrichtungen, sodass durch Betätigen des Betätigungselements die Verschlussvorrichtungen entriegelt und die Befestigungseinheiten somit voneinander gelöst werden können.

Zur Ausbildung der Getriebeverbindung kann das Betätigungselement beispielsweise einen Verzahnungsabschnitt aufweisen, der mit einer zugeordneten Verzahnung des Wirkelements in Verzahnungseingriff stehen, sodass bei einem Verstellen des Betätigungselements die Verzahnungsabschnitte des Betätigungselements mit der Verzahnung an dem Wirkelementen kämmt und das Wirkelement einer jeden Verschlussvorrichtung somit verdreht wird. Durch Verdrehen der gesonderten Wirkelemente oder des gemeinsamen Wirkelements werden die Verstellteile betätigt, wodurch die Verriegelungselemente der einzelnen Verschlussvorrichtungen verstellt und damit die Verriegelung gelöst wird.

Eine Getriebeverbindung kann statt über einen Verzahnungseingriff auch über ein anderes Getriebe, zum Beispiel ein Hebelgetriebe, ein Reibelemente aufweisendes Reibgetriebe oder einen Seiltrieb oder dergleichen geschaffen sein.

Beispielweise kann die Getriebeverbindung auch über ein Kopplungselement hergestellt sein, das zum Beispiel in Form eines Kopplungszapfens an dem Betätigungselement geformt ist und in eine Kopplungsöffnung an dem Wirkelement eingreift. Über eine solche Kopplung kann eine Längsverstellbewegung des Betätigungselements in eine Drehbewegung des Wirkelements umgesetzt werden, sodass durch Betätigen des Betätigungselements das Wirkelements verdreht werden kann. Auf diese Weise können gesonderte Wirkelemente der Verschlussvorrichtungen oder ein gemeinsames Wirkelement sämtlicher Verschlussvorrichtungen über das Betätigungselement verdreht werden.

Eine Betätigung einer Mehrzahl von Verschlussvorrichtungen über ein gemeinsames Betätigungselement und eine Kopplung des Betätigungselements mit Wirkelementen über eine Getriebeverbindung kann auch bei einer Verschlussbaugruppe zum Einsatz kommen, bei denen die Wirkelemente der einzelnen Verschlussvorrichtungen nicht drehbar, sondern beispielsweise linear verstellbar sind.

Beispielsweise weist eine Anschlussbaugruppe eine Mehrzahl von Verschlussvorrichtungen auf, die jeweils umfassen: ein einen Körper aufweisendes erstes Verschlussteil und ein zweites Verschlussteil, die zum Schließen der Verschlussvorrichtung entlang einer Schließrichtung aneinander ansetzbar und in einer Schließstellung miteinander verbunden sind, und zumindest ein Verriegelungselement, das zu dem Körper des ersten Verschlussteils verstellbar ist, und zumindest einen Eingriffsabschnitt, der an dem zweiten Verschlussteil geformt ist. Das zumindest eine Verriegelungselement und der zumindest eine Eingriffsabschnitt stehen in einer Schließstellung derart miteinander in Eingriff, dass das erste Verschlussteil und das zweite Verschlussteil miteinander verriegelt sind. Dabei ist vorgesehen, dass das erste Verschlussteil jeder Verschlussvorrichtung eine erste Magneteinrichtung und das zweite Verschlussteil jeder Verschlussvorrichtung eine zweite Magneteinrichtung aufweisen, wobei die erste Magneteinrichtung und die zweite Magneteinrichtung bei Ansetzen des ersten Verschlussteils und des zweiten Verschlussteils aneinander magnetisch anziehend zusammenwirken und das zumindest eine Verriegelungselement derart magnetisch ausgebildet ist, dass das zumindest eine Verriegelungselement in der Schließstellung durch die erste Magneteinrichtung und/oder die zweite Magneteinrichtung in Richtung eines Eingriffs mit dem zumindest einen Eingriffsabschnitt belastet ist. Das erste Verschlussteil jeder Verschlussvorrichtung weist ein Verstellteil und ein mit dem Verstellteil wirkverbundenes Wirkelement auf, wobei durch Verstellen des Wirkelements das Verstellteil in eine Betätigungsrichtung betätigbar ist, um das zumindest eine Verriegelungselement zum Lösen des ersten Verschlussteils und des zweiten Verschlussteils voneinander außer Eingriff von dem zumindest einen Eingriffsabschnitt zu bringen, wobei die Verschlussbaugruppe ein Betätigungselement aufweist, das über eine Getriebeverbindung mit den Wirkelementen der ersten Verschlussteile der Mehrzahl von Verschlussvorrichtungen verbunden ist derart, dass durch Betätigen des Betätigungselements die Wirkelemente gemeinsam verstellbar sind.

Eine Verschlussbaugruppe dieser Art ist mit den vorangehend erläuterten Aspekten und vorteilhaften Ausgestaltungen der einzelnen Verschlussvorrichtungen kombinierbar, sodass diesbezüglich vollumfänglich auf die vorangehenden Ausführungen verwiesen werden soll.

Die Wirkelemente können bei der Verschlussbaugruppe durch gesonderte Wirkelemente ausgebildet sein, sodass jeder Verschlussvorrichtung ein eigenes Wirkelement zugeordnet ist. Die Wirkelemente können aber auch durch ein gemeinsames, integrales Element ausgebildet sein, das um eine gemeinsame Drehachse drehbar ist.

Die Verstellteile können beispielsweise als Wippe ausgebildet sein, die über schräge Umlenkflächen betätigt werden.

Der der Erfindung zugrunde liegende Gedanke soll nachfolgend anhand der in den Figuren dargestellten Ausführungsbeispiele näher erläutert werden. Es zeigen:
- Fig. 1: eine Ansicht eines Ausführungsbeispiels einer Verschlussbaugruppe mit einer ersten Befestigungseinheit und zweiten Befestigungseinheit, in einer voneinander getrennten Stellung der Befestigungseinheiten;
- Fig. 2: eine andere Ansicht der Verschlussbaugruppe;
- Fig. 3: eine Explosionsansicht der Verschlussbaugruppe;
- Fig. 4: eine gesonderte Ansicht der zweiten Befestigungseinheit;
- Fig. 5: eine andere Ansicht der zweiten Befestigungseinheit;
- Fig. 6: eine gesonderte Ansicht der ersten Befestigungseinheit;
- Fig. 7: eine andere Ansicht der ersten Befestigungseinheit;
- Fig. 8: eine Ansicht von Verschlussteilen der ersten Befestigungseinheit;
- Fig. 9A: eine Ansicht einer einzelnen Verschlussvorrichtung der Verschlussbaugruppe, in einer Schließstellung;
- Fig. 9B: eine Draufsicht auf die Anordnung gemäß Fig. 9A;
- Fig. 9C: eine Schnittansicht entlang der Linie A-A gemäß Fig. 9B;
- Fig. 9D: eine Seitenansicht der Anordnung gemäß Fig. 9A;
- Fig. 9E: eine teiltransparente Draufsicht auf die Anordnung gemäß Fig. 9A;
- Fig. 10A: eine Ansicht einer einzelnen Verschlussvorrichtung der Verschlussbaugruppe, beim Öffnen durch Betätigen eines Wirkelements;
- Fig. 10B: eine Draufsicht auf die Anordnung gemäß Fig. 10A;
- Fig. 10C: eine Schnittansicht entlang der Linie A-A gemäß Fig. 10B;
- Fig. 10D: eine Seitenansicht der Anordnung gemäß Fig. 10A;
- Fig. 10E: eine teiltransparente Draufsicht auf die Anordnung gemäß Fig. 10A;
- Fig. 11A: eine Ansicht einer einzelnen Verschlussvorrichtung der Verschlussbaugruppe, beim weiteren Öffnen;
- Fig. 11B: eine Draufsicht auf die Anordnung gemäß Fig. 11A;
- Fig. 11C: eine Schnittansicht entlang der Linie A-A gemäß Fig. 11B;
- Fig. 11D: eine Seitenansicht der Anordnung gemäß Fig. 11A;
- Fig. 11E: eine teiltransparente Draufsicht auf die Anordnung gemäß Fig. 11A;
- Fig. 12A: eine Ansicht einer einzelnen Verschlussvorrichtung der Verschlussbaugruppe, in einer geöffneten Stellung;
- Fig. 12B: eine Draufsicht auf die Anordnung gemäß Fig. 12A;
- Fig. 12C: eine Schnittansicht entlang der Linie A-A gemäß Fig. 12B;
- Fig. 12D: eine Seitenansicht der Anordnung gemäß Fig. 12A;
- Fig. 12E: eine teiltransparente Draufsicht auf die Anordnung gemäß Fig. 12A;
- Fig. 13: eine vergrößerte Ausschnitt der Schnittansicht gemäß Fig. 9C, darstellend die Verriegelung in der Schließstellung;
- Fig. 14: eine Explosionsansicht eines weiteren Ausführungsbeispiels einer Verschlussbaugruppe;
- Fig. 15: eine Ansicht der Verschlussbaugruppe, in einer geöffneten Stellung;
- Fig. 16: eine Ansicht der Verschlussbaugruppe, in einer Schließstellung;
- Fig. 17A: eine Ansicht der Verschlussbaugruppe, in der Schließstellung;
- Fig. 17B: eine Draufsicht auf die Verschlussbaugruppe;
- Fig. 17C: eine Seitenansicht der Verschlussbaugruppe;
- Fig. 17D: eine Schnittansicht entlang der Linie A-A gemäß Fig. 17B;
- Fig. 17E: eine Schnittansicht entlang der Linie B-B gemäß Fig. 17B;
- Fig. 17F: eine Schnittansicht entlang der Linie C-C gemäß Fig. 17C;
- Fig. 17G: eine Schnittansicht entlang der Linie D-D gemäß Fig. 17B;
- Fig. 18A: eine Ansicht der Verschlussbaugruppe, beim Öffnen;
- Fig. 18B: eine Draufsicht auf die Verschlussbaugruppe;
- Fig. 18C: eine Seitenansicht der Verschlussbaugruppe;
- Fig. 18D: eine Schnittansicht entlang der Linie A-A gemäß Fig. 18B;
- Fig. 18E: eine Schnittansicht entlang der Linie B-B gemäß Fig. 18B;
- Fig. 18F: eine Schnittansicht entlang der Linie C-C gemäß Fig. 18C;
- Fig. 18G: eine Schnittansicht entlang der Linie D-D gemäß Fig. 18B;
- Fig. 19A: eine Ansicht der Verschlussbaugruppe, beim weiteren Öffnen;
- Fig. 19B: eine Draufsicht auf die Verschlussbaugruppe;
- Fig. 19C: eine Seitenansicht der Verschlussbaugruppe;
- Fig. 19D: eine Schnittansicht entlang der Linie A-A gemäß Fig. 19B;
- Fig. 19E: eine Schnittansicht entlang der Linie B-B gemäß Fig. 19B;
- Fig. 19F: eine Schnittansicht entlang der Linie C-C gemäß Fig. 19C;
- Fig. 19G: eine Schnittansicht entlang der Linie D-D gemäß Fig. 19B;
- Fig. 20A: eine Ansicht der Verschlussbaugruppe, in einer geöffneten Stellung;
- Fig. 20B: eine Draufsicht auf die Verschlussbaugruppe;
- Fig. 20C: eine Seitenansicht der Verschlussbaugruppe;
- Fig. 20D: eine Schnittansicht entlang der Linie A-A gemäß Fig. 20B;
- Fig. 20E: eine Schnittansicht entlang der Linie B-B gemäß Fig. 20B;
- Fig. 20F: eine Schnittansicht entlang der Linie C-C gemäß Fig. 20C;
- Fig. 20G: eine Schnittansicht entlang der Linie D-D gemäß Fig. 20B;
- Fig.21A: eine gesonderte Ansicht einer Verriegelungsbaugruppe einer Befestigungseinheit der Verschlussbaugruppe, in einer verriegelten Stellung, von oben;
- Fig. 21B: eine Ansicht der Verriegelungsbaugruppe der Befestigungseinheit der Verschlussbaugruppe, in der verriegelten Stellung, von unten;
- Fig. 21C: eine ausschnittsweise vergrößerte Ansicht im Ausschnitt E gemäß Fig. 21B;
- Fig. 22A: eine Ansicht der Verriegelungsbaugruppe der Befestigungseinheit der Verschlussbaugruppe, in einer entriegelten Stellung, von oben;
- Fig. 22B: eine Ansicht der Verriegelungsbaugruppe der Befestigungseinheit der Verschlussbaugruppe, in der verriegelten Stellung, von unten; und
- Fig. 22C: eine vergrößerte Ansicht im Ausschnitt E gemäß Fig. 22B;

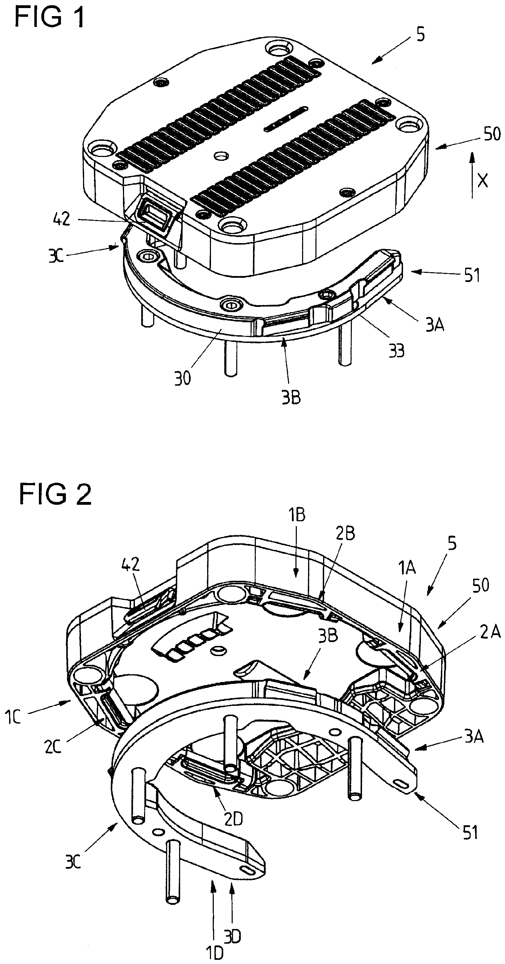

Fig. 1 bis 13 zeigen ein Ausführungsbeispiel einer Verschlussbaugruppe 5, die Befestigungseinheiten 50, 51 aufweist, die entlang einer Schließrichtung X, wie aus Fig. 1 ersichtlich, aneinander angesetzt werden können und in einer Schließstellung fest miteinander verbunden sind.

Die Verschlussbaugruppe 5 kann beispielsweise zur Befestigung einer Tasche an einer übergeordneten Baugruppe, zum Beispiel an einem Fahrzeug, zum Beispiel einem Motorrad, Verwendung finden. Eine zu befestigende Baugruppe, zum Beispiel eine Tasche, kann hierbei beispielsweise mit der Befestigungseinheit 50 verbunden sein, während die Befestigungseinheit 51 an der übergeordneten Baugruppe, beispielsweise dem Fahrzeug, festgelegt ist, sodass über die Verschlussbaugruppe 5 die zu befestigende Baugruppe an der übergeordneten Baugruppe lösbar festgelegt werden kann.

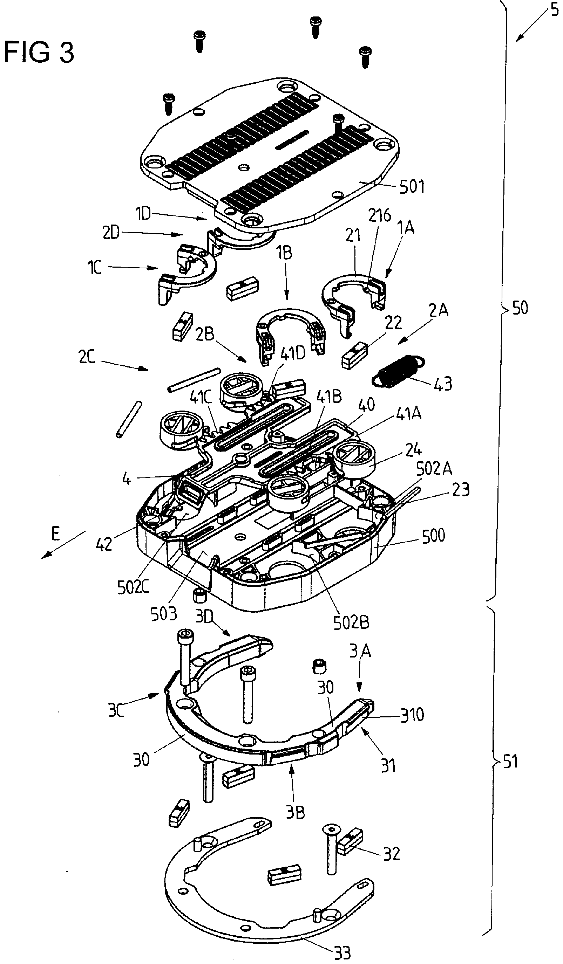

Wie aus Fig. 1 und 2 in Zusammenschau mit der Explosionsansicht gemäß Fig. 3 ersichtlich ist, weist die Befestigungseinheit 50 ein Gehäuseteil 500 auf, das über einen Deckel 501 verschlossen ist.

In dem Gehäuseteil 500 ist ein Betätigungselement 4 entlang einer Entriegelungsrichtung E verschiebbar gelagert, wobei ein Griff 42, wie aus Fig. 1 und 2 ersichtlich, aus dem Gehäuseteil 500 vorsteht und von außen zugänglich ist, sodass das Betätigungselement 4 von außen zum Beispiel händisch durch einen Nutzer betätigt werden kann.

Die Verschlussbaugruppe 5 weist eine Mehrzahl von Verschlussvorrichtungen 1A-1D auf, die jeweils ein erstes Verschlussteil 2A-2D und ein zweites Verschlussteil 3A-3D umfassen und dazu dienen, die Befestigungseinheiten 50, 51 in der Schließstellung fest miteinander zu verriegeln, sodass die Befestigungseinheiten 50, 51 belastbar aneinander gehalten sind.

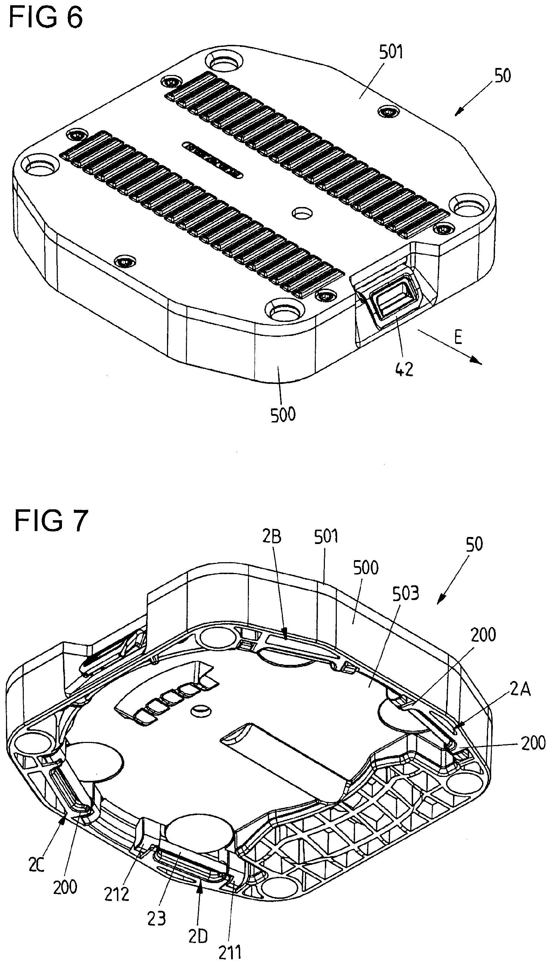

Die ersten Verschlussteile 2A-2D, deren Funktion nachfolgend noch im Einzelnen erläutert werden soll, sind an der Befestigungseinheit 50 angeordnet und weisen, wie aus der Explosionsansicht gemäß Fig. 3 in Zusammenschau mit Fig. 6 und 7 ersichtlich, jeweils ein Verriegelungselement 23, ein Verstellteil 21 und ein in einer jeweils zugeordneten Lageraufnahme 502A-502D des Gehäuseteils 500 drehbar aufgenommenes Wirkelement 24 auf.

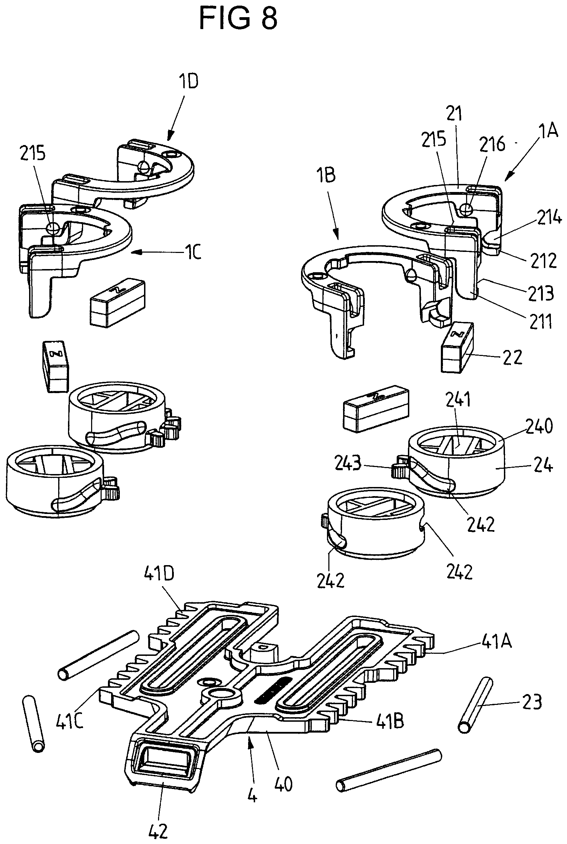

An einem Drehkörper 240 eines jeden Wirkelements 24 ist, wie zum Beispiel aus Fig. 8 ersichtlich, eine Verzahnung 243 geformt, über die ein jedes Wirkelement 24 mit einem zugeordneten Verzahnungsabschnitt 41A-41D an einem Verstellkörper 40 des Betätigungselements 4 in Verzahnungseingriff steht, sodass die Wirkelemente 24 gemeinsam durch Betätigen des Betätigungselements 4 verdreht werden können.

Das Betätigungselement 4 ist über ein Federelement 43 gegenüber dem Gehäuseteil 500 federvorgespannt, sodass eine Betätigung des Betätigungselements 4 in die Entriegelungsrichtung E entgegen der Federvorspannung des als Zugfeder ausgebildeten Federelements 43 erfolgt und das Betätigungselement 4 nach einer erfolgten Betätigung selbsttätig aufgrund der Federvorspannung in eine nicht betätigte Ausgangsstellung zurückgestellt wird.

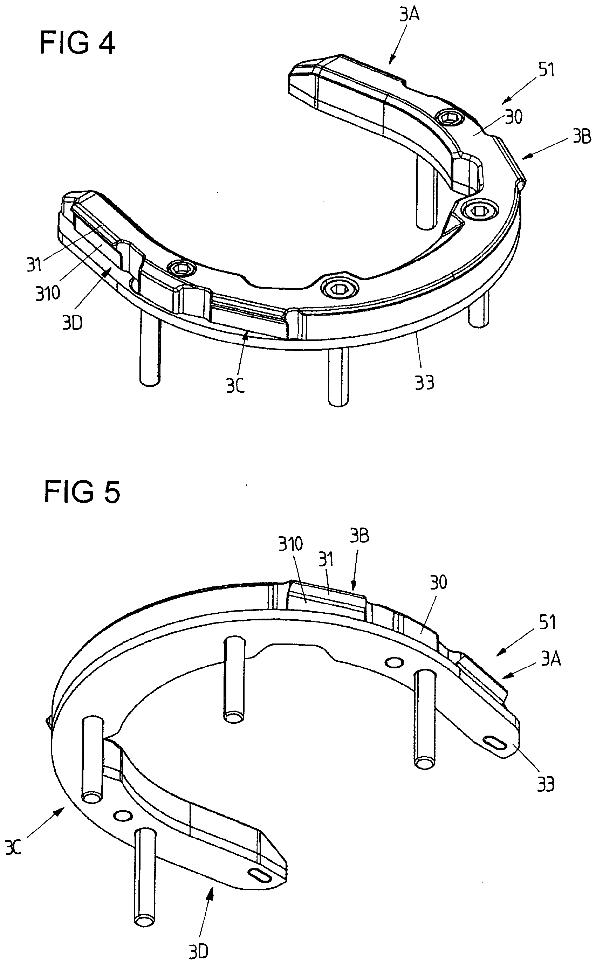

Die zweiten Verschlussteile 3A-3D sind, wie zum Beispiel aus Fig. 4 und 5 ersichtlich, demgegenüber an einer hufeisenförmigen Basis 30 geformt und weisen jeweils ein Eingriffselement 31 mit einem daran geformten Eingriffsabschnitt 310 auf, der zum Wechselwirken mit den Verriegelungselementen 23 der ersten Verschlussteile 2A-2D der Befestigungseinheit 50 dient. Die Basis 30 ist über eine Befestigungsplatte 33 und geeignete Befestigungselemente, zum Beispiel in Form von Schrauben, an einer übergeordneten Einheit festzulegen, beispielsweise einem Fahrzeug, zum Beispiel einem Tank eines Motorrads.

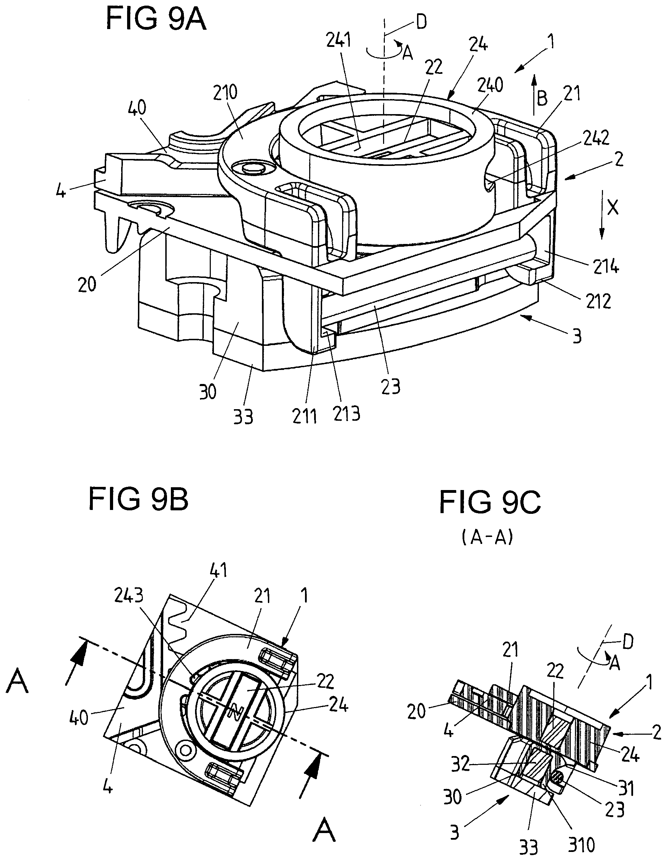

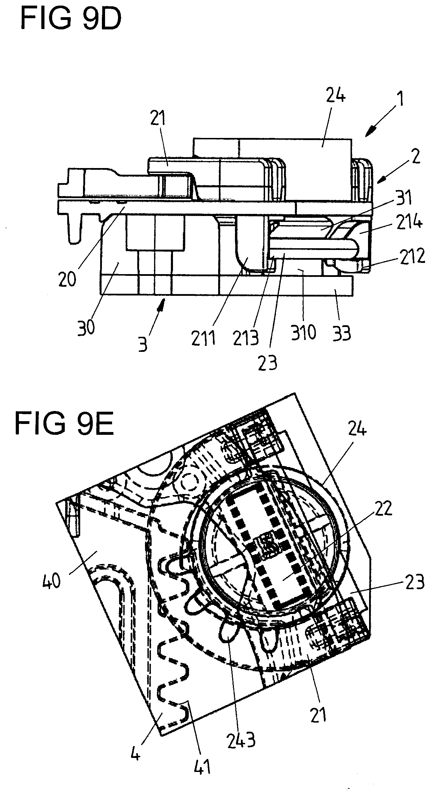

Die Funktionsweise einer jeden Verschlussvorrichtung 1A-1D die soll nachfolgend anhand von Fig. 9A-9E bis Fig. 12A-12E beschrieben werden, wobei in Fig. 9A-9E bis Fig. 12A-12E eine einzelne Verschlussvorrichtung 1 in unterschiedlichen Stellungen dargestellt und einheitlich - stellvertretend für die Verschlussvorrichtungen 1A-1D gemäß Fig. 1-8 - mit dem Bezugszeichen 1 bezeichnet ist.

Die Verschlussvorrichtung 1, wie sie in Fig. 9A-9E bis Fig. 12A-12E dargestellt ist, weist ein Verriegelungselement 23 in Form eines stabförmigen Elements auf, das an Lagerarmen 211, 212 an einem Körperelement 210 des Verstellteils 21 angeordnet und mit voneinander abliegenden Enden in Lageröffnungen 213, 214 an den Lagerarmen 211, 212 aufgenommen ist. Das Verstellteil 21 ist entlang einer Betätigungsrichtung B, die der Schließrichtung X entgegengesetzt ist, verstellbar an einem Körper 20 des Verschlussteils 2 gelagert, der durch einen Boden 503 des Gehäuseteils 500 gebildet ist (siehe die Explosionsansicht gemäß Fig. 3). Das Verstellteil 21 ragt hierzu mit den Lagerarmen 211, 212 durch den Körper 20 hindurch und ist an einer dem Wirkelement 24 abgewandten Seite des Körpers 20 mit dem Verriegelungselement 23 gekoppelt.

Das Wirkelement 24 weist einen Drehkörper 240 auf, der um eine Drehachse D zu dem Körper 20 drehbar ist. Das Wirkelement 24 ist über Führungseinrichtungen 242 in Form von diametral einander gegenüberliegenden, an einer außenseitigen, umfänglichen Mantelfläche des Drehkörpers 240 geformten Kulissenführungen (siehe hierzu zum Beispiel Fig. 8) mit Führungselementen 215, 216 in Form von Führungszapfen innenseitig des Körperelements 210 des Verstellteils 21 gekoppelt derart, dass eine Drehbewegung des Wirkelements 24 in eine Drehrichtung A um die Drehachse D in eine lineare Verstellbewegung des Verstellteils 21 in die Betätigungsrichtung B zu dem Körper 20 und somit zu dem Boden 503 des Gehäuseteils 500 umgesetzt wird.

Die Kulissenführungen 242 sind hierzu schräg zur Schließrichtung X erstreckt, wobei die Führungselemente 215, 216 bei einer Drehbewegung des Wirkelements 24 in den Kulissenführungen 242 gleiten und das Verstellteil 21 dadurch entlang der Betätigungsrichtung B bewegt wird.

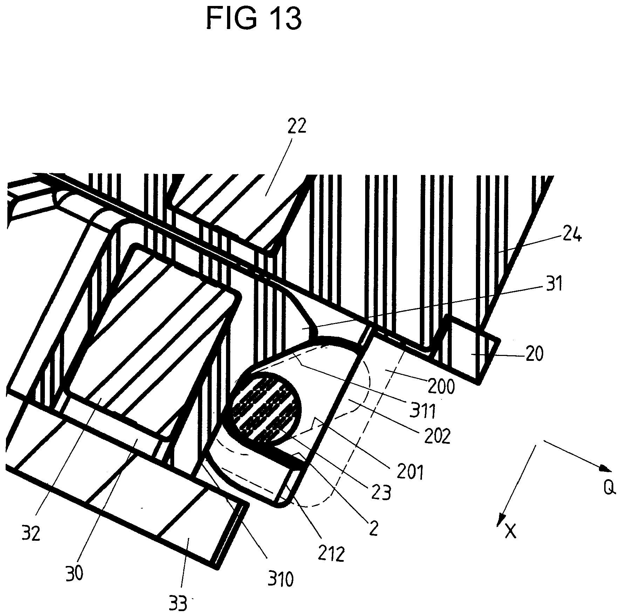

Fig. 9A-9E zeigen die Verschlussvorrichtung 1 in der Schließstellung, in der das Verriegelungselement 23 des Verschlussteils 2 an der Befestigungseinheit 50 verriegelnd mit einem Eingriffselement 31 des Verschlussteils 3 an der Befestigungseinheit 51 in Eingriff steht, wie dies zum Beispiel aus der Schnittansicht gemäß Fig. 9C in Zusammenschau mit der vergrößerten Darstellung gemäß Fig. 13 ersichtlich ist.

Das Verriegelungselement 23 ist, zusätzlich zur Kopplung mit dem Verstellteil 21, in einer Aufnahmeöffnung 202 an einem an dem Körper 20 geformten, in die Schließrichtung X von dem Boden 503 der Befestigungseinheit 50 vorstehenden Stützelement 200 aufgenommen, wie dies aus einer Zusammenschau von Fig. 7 mit Fig. 13 ersichtlich ist. Die Aufnahmeöffnung 202 ist nach Art eines Langlochs geformt und hierbei schräg zur Schließrichtung X in einer durch die Schließrichtung X und eine Querrichtung Q aufgespannten Ebene erstreckt derart, dass das stabförmige Verriegelungselement 23, das senkrecht zu der durch die Schließrichtung X und die Querrichtung Q aufgespannten Ebene erstreckt ist, in der zugeordnete Aufnahmeöffnung 202 bewegbar ist.

Zum Schließen der Verschlussrichtung 1 werden die Verschlussteile 2, 3 entlang der Schließrichtung X derart aneinander angesetzt, dass ein jedes Eingriffselement 31 an der Befestigungseinheit 51 in Eingriff mit dem jeweils zugeordneten Verriegelungselement 23 an der Befestigungseinheit 50 gelangt. Das Eingriffselement 31 drängt beim Ansetzen das Verriegelungselement 23 nach außen und somit in den Aufnahmeöffnungen 202 beiseite, sodass die Verschlussteile 2, 3 in die in Fig. 9A-9E dargestellte Schließstellung gelangen.

Ein jedes Verschlussteil 2, 3 weist hierbei eine Magneteinrichtung auf, die sich beim Ansetzen der Verschlussteile 2, 3 aneinander magnetisch anziehend gegenüberstehen, sodass das Ansetzen der Befestigungseinheiten 50, 51 aneinander zum Schließen der Verschlussbaugruppe 5 magnetisch unterstützt wird. Die Magneteinrichtungen 22, 32 können zum Beispiel jeweils durch einen Permanentmagneten ausgebildet sein, wobei sich die Magneteinrichtungen 22, 32 der einzelnen Verschlussteile 2, 3 mit ungleichnamigen Polen gegenüberstehen und somit magnetisch anziehend zusammenwirken. Denkbar ist auch, eine der Magneteinrichtungen 22, 32 durch einen Permanentmagneten und die andere Magneteinrichtung 32, 22 durch einen magnetischen Anker aus einem ferromagnetischen Material auszubilden.

Bei dem dargestellten Ausführungsbeispiel ist die Magneteinrichtung 22 des Verschlussteils 2 in einer Montageöffnung 241 innerhalb des Drehkörpers 240 des Wirkelements 24 aufgenommen, sodass die Magneteinrichtung 22 bei einem Verdrehen des Wirkelements 24 gemeinsam mit dem Wirkelement 24 um die Drehachse D verdrehbar ist.

Die Magneteinrichtung 32 des Verschlussteils 3 ist demgegenüber innerhalb der Basis 30 aufgenommen.

Die Magneteinrichtung 32 des zweiten Verschlussteils 3 wirkt magnetisch anziehend mit dem Verriegelungselement 23 zusammen. Dies bewirkt, dass in der Schließstellung das Verriegelungselement 23 in Eingriff mit dem Eingriffsabschnitt 310 am Eingriffselement 31 gezogen wird, sodass darüber eine formschlüssige Verriegelung zwischen den Verschlussteilen 2, 3 hergestellt ist, wie dies aus Fig. 9A-9E ersichtlich ist.

Werden die Verschlussteile 2, 3 zueinander belastet, so verkeilt das Verriegelungselement 23 zwischen einer Schrägfläche 311 an dem Eingriffsabschnitt 310 und einer gegenüberliegenden Schrägfläche 201 innerhalb der Aufnahmeöffnung 202 am Stützelement 200, wie dies aus Fig. 13 ersichtlich ist. Die Verschlussteile 2, 3 sind somit in verriegelter Weise aneinander gehalten und können sich nicht ohne weiteres, jedenfalls nicht ohne Lösen der Verriegelung, voneinander lösen (wobei gegebenenfalls ein Trennen der Verschlussteile 2, 3 bei Überschreiten einer vorbestimmten Grenzkraft möglich ist).

Sollen die Verschlussteile 2, 3 voneinander gelöst werden, so kann das Wirkelement 24 um die Drehachse D in die Drehrichtung A verdreht werden, indem das Betätigungselement 4 in die Entriegelungsrichtung E zu dem Gehäuseteil 500 der Befestigungseinheit 50 bewegt wird. Die Wirkelemente 24 sämtlicher Verschlussvorrichtungen 1A-1D der Verschlussbaugruppe 5 werden hierbei gemeinsam betätigt, bewirkt durch die Getriebeverbindung zwischen dem Betätigungselement 4 mit den einzelnen Wirkelementen 24.

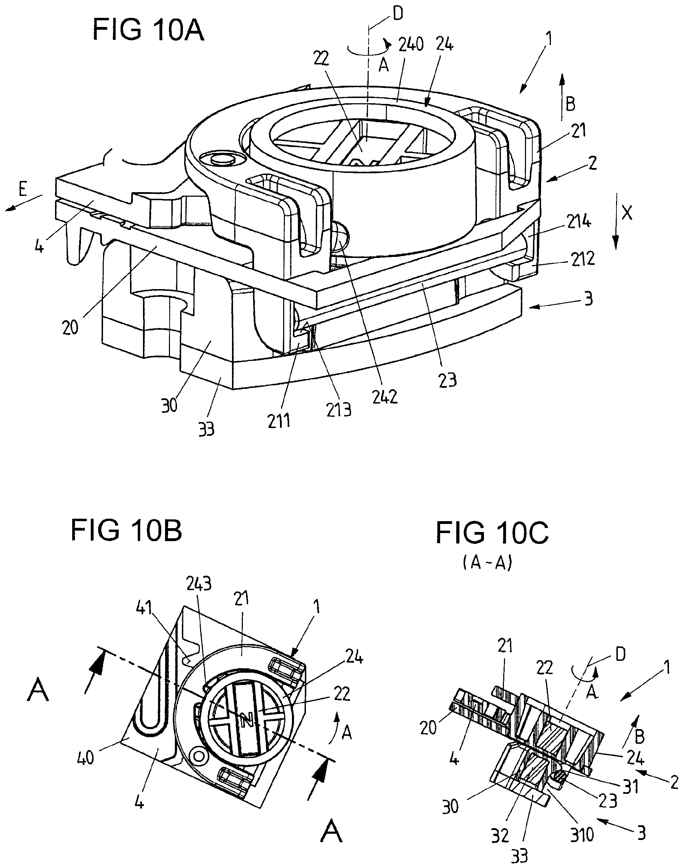

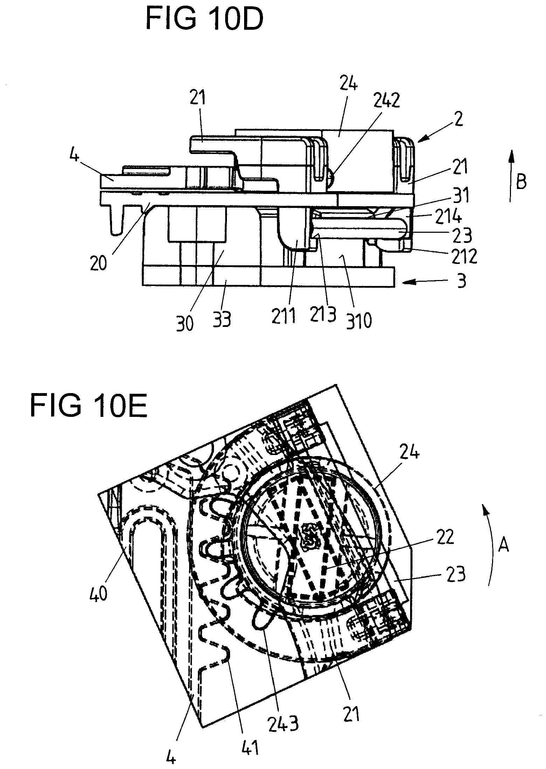

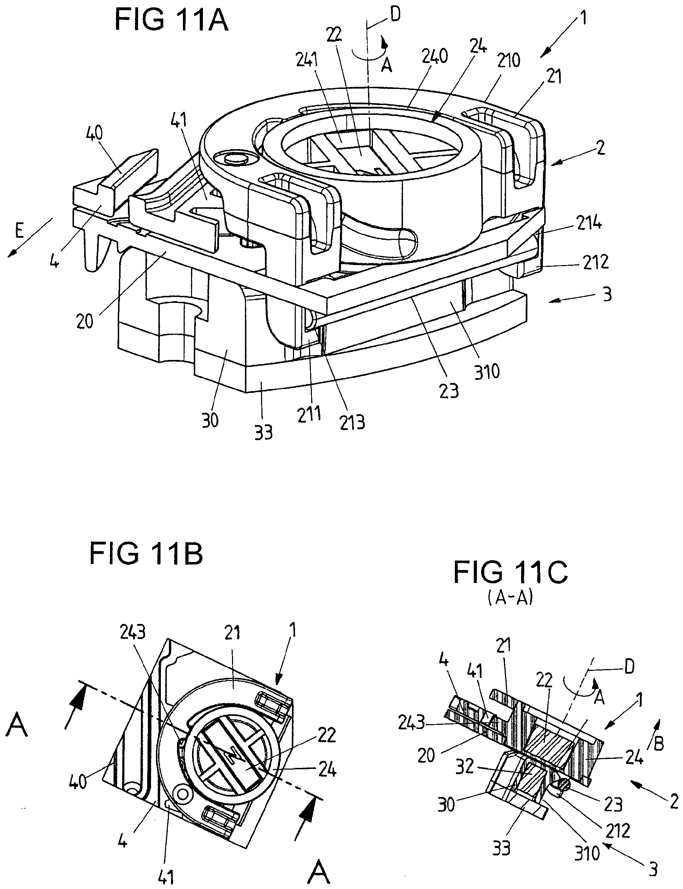

Durch Verdrehen des Wirkelements 24 in die Drehrichtung A wird das Verstellteil 21 einer jeden Verschlussvorrichtung 1, wie dies aus Fig. 10A-10D und 11A-11D ersichtlich ist, in die Betätigungsrichtung B verstellt. Dadurch wird das Verriegelungselement 23 mitgenommen, wobei das Verriegelungselement 23 auf die Schrägfläche 311 am Eingriffsabschnitt 310 des Eingriffselements 31 aufläuft, dadurch nach außen in die Querrichtung Q verstellt wird und somit an dem Eingriffselement 31 vorbei bewegt wird.

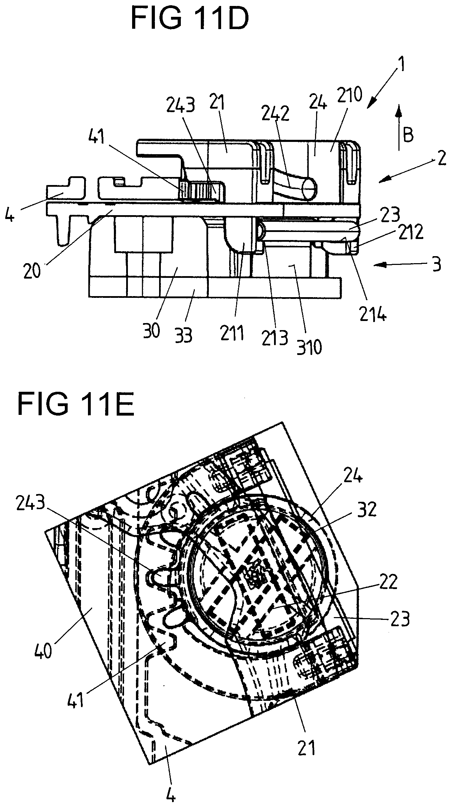

Weil bei einem Verdrehen des Wirkelements 24 auch die Magneteinrichtung 22 des Verschlussteils 2 mit verdreht wird, schwächt sich, wie dies beispielsweise aus der überlagerten, transparenten Ansicht gemäß Fig. 11 ersichtlich ist, die magnetische Anziehung zwischen den Magneteinrichtungen 22, 32 ab, weil die Magneteinrichtungen 22, 32 außer Deckung voneinander gebracht werden.

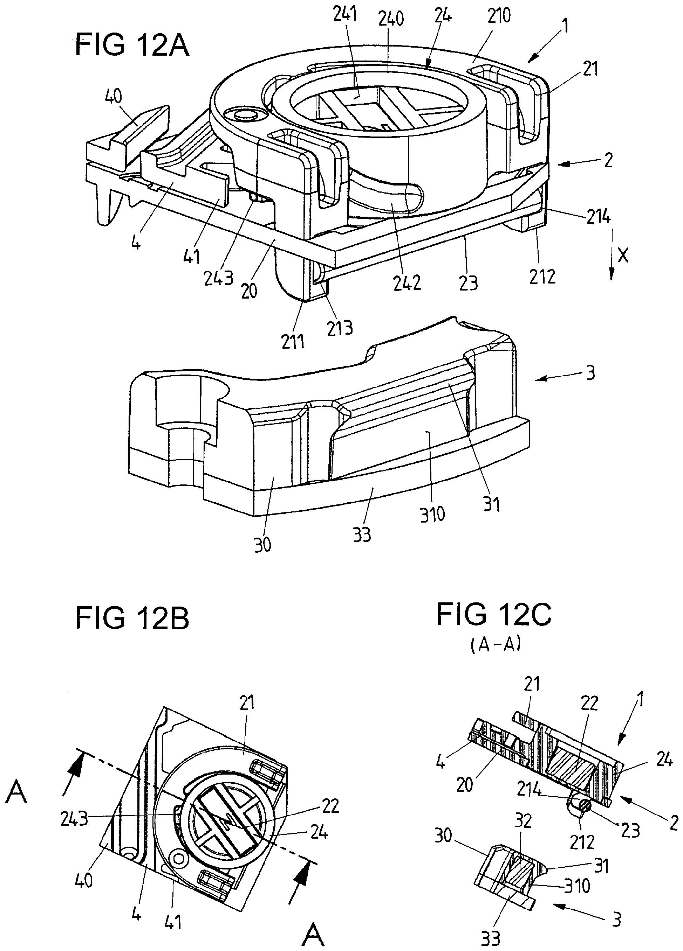

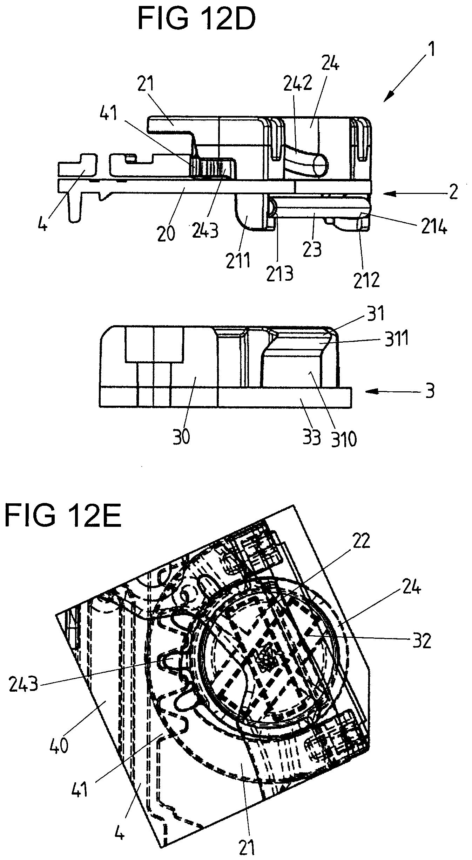

Die Verschlussteile 2, 3 können somit in einfacher Weise entgegen der Schließrichtung X voneinander gelöst werden, wie dies in Fig. 12A-12E dargestellt ist. Die zum Öffnen benötigte Kraft ist bei dieser Ausführungsform durch die Magnetkraft vorgegeben, die zwischen der Magneteinrichtung 22 und der Magneteinrichtung 32 wirkt. Das Verstellteil 21 ist also magnetisch vorgespannt und kann nicht ohne weiteres durch kleine Auslösekräfte versehentlich geöffnet werden.

Unter Last erhöht sich hierbei die Kraft, die zum Verschieben des Verstellteils 21 notwendig ist.

Dadurch, dass die Befestigungseinheiten 50, 51 der Verschlussbaugruppe 5 über mehrere Verschlussvorrichtungen 1A-1D einander verbunden sind, ergibt sich eine feste, belastbare Mehrpunkt-Verbindung in der Schließstellung.

Das Öffnen der Verschlussvorrichtung 1 ist einfach und komfortabel. Insbesondere kann ein Nutzer zum Öffnen einfach das Betätigungselement 4 am Griff 42 greifen und in die Entriegelungsrichtung E ziehen. Die Verschlussvorrichtungen 1A-1D können hierdurch gemeinsam geöffnet werden, sodass die Befestigungseinheiten 50, 51 entgegen der Schließrichtung X voneinander gelöst werden können.

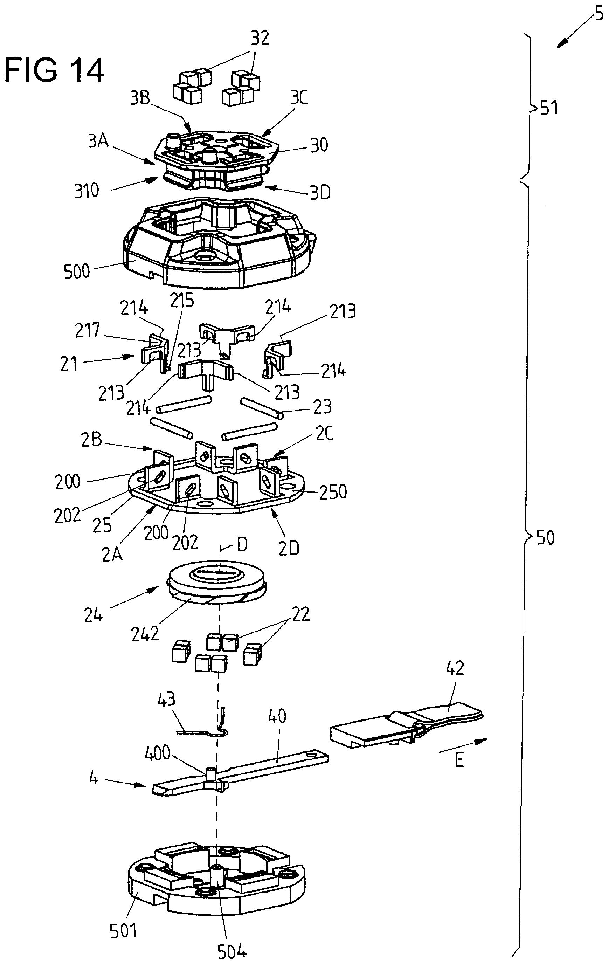

Ein weiteres Ausführungsbeispiel einer Verschlussbaugruppe 5 ist in Fig. 14 bis 22A-22C dargestellt.

Bei diesem Ausführungsbeispiel weist eine Verschlussbaugruppe 5 Befestigungseinheiten 50, 51 auf, die aneinander angesetzt werden können, um eine Verbindung zwischen den Befestigungseinheiten 50, 51 und somit von mit den Befestigungseinheit 50, 51 verbundenen Baugruppen herzustellen.

Bei dem dargestellten Ausführungsbeispiel weist eine erste Befestigungseinheit 50 ein durch Gehäuseteile 500, 501 gebildetes Gehäuse auf, das eine Verriegelungsbaugruppe 25 einfasst. Die Verriegelungsbaugruppe 25 bildet hierbei Verschlussvorrichtungen 2A-2D aus, die jeweils ein Verriegelungselement 23 aufweisen, das an zugeordneten Stützelementen 200 in Form von von einem Scheibenkörper 250 vorstehenden Laschen angeordnet und in Aufnahmeöffnungen 202 in Form von Langlöchern an den Stützelementen 200 geführt ist.

Verstellteile 21 der Verschlussvorrichtungen 2A-2D sind bei dem dargestellten Ausführungsbeispiel durch eine Anordnung von Schiebeelement 217 ausgebildet, die an dem Gehäuseteil 500 des Gehäuses geführt sind und Lageröffnungen 213, 214 zum Einwirken auf Enden der Verriegelungselemente 23 aufweisen.

An dem Gehäuseteil 501 ist ein Wirkelement 24 um eine Drehachse D drehbar gelagert, das den Verschlussvorrichtungen 2A-2D gemeinsam zugeordnet ist und Führungseinrichtungen 242 zum Zusammenwirken mit den Schiebeelementen 217 ausbildet. Das Wirkelement 24 ist an einem Lagerelement 504 des Gehäuseteils 501 gelagert und kann verdreht werden, um die Schiebeelemente 217 gemeinsam zu verstellen und dadurch auf die Verriegelungselemente 23 einzuwirken.

Ein Betätigungselement 4 weist einen Verstellkörper 40 in Form eines längserstreckten Stabes auf, der mit einem Griff 42 gekoppelt ist, an dem ein Nutzer zum Betätigen des Betätigungselements 40 angreifen kann. Das Betätigungselement 4 ist zwischen den Gehäuseteilen 500, 501 entlang einer Entriegelungsrichtung E verschiebbar geführt und ist über ein Kopplungselement 400 in Form eines Kopplungszapfens derart mit dem Wirkelement 24 gekoppelt, dass durch Längsverschieben des Betätigungselements 4 das Wirkelement 24 um die Drehachse D verdreht werden kann, um auf diese Weise die Schiebeelemente 217 zu verstellen.

Eine zweite Befestigungseinheit 51 ist durch einen Körper 30 gebildet, an dem Verschlussteile 3A-3D mit jeweils einem Eingriffselement 31 in Form eines durch einen Vorsprung begrenzten Eingriffsabschnitts 310 geformt sind. Einem jeden Verschlussteil 2A-2D der Befestigungseinheit 50 ist hierbei ein Verschlussteil 3A, 3D der Befestigungseinheit 51 zugeordnet.

An dem Wirkelement 24 sind Magnetelemente 22 in Form von einer Anordnung von Permanentmagneten angeordnet. Die Magnetelemente 22 sind der Befestigungseinheit 50 zugeordnet. An dem Körper 30 der Befestigungseinheit 51 sind Magnetelemente 32 in Form von einer Anordnung von Permanentmagneten angeordnet. Durch Wechselwirkung der Magnetelemente 22, 32 erfolgt das Ansetzen der Befestigungseinheiten 50, 51 zur Herstellung einer verriegelten Verbindung zwischen den Verschlussteilen 2A-2D, 3A-3D in magnetisch unterstützter Weise.

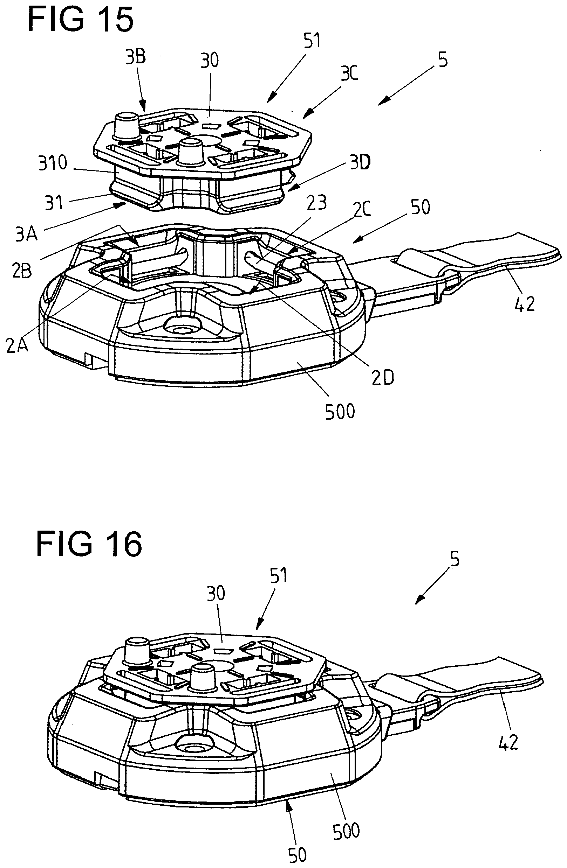

Fig. 15 zeigt die Verschlussbaugruppe 5 in einer geöffneten Stellung. Fig. 16 zeigt die Verschlussbaugruppe 5 demgegenüber in einer Schließstellung. In der geschlossenen Stellung sind die Befestigungseinheiten 50, 51 miteinander verbunden und so miteinander verriegelt, dass die Befestigungseinheiten 50, 51 und somit Baugruppen, die mit den Befestigungseinheit 50, 51 verbunden sind, fest und belastbar aneinandergehalten sind.

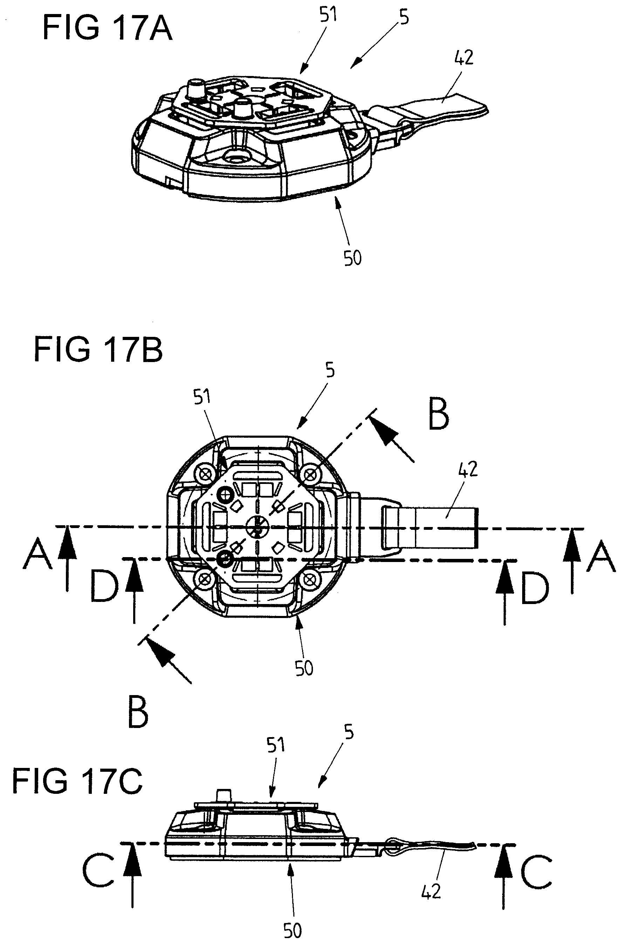

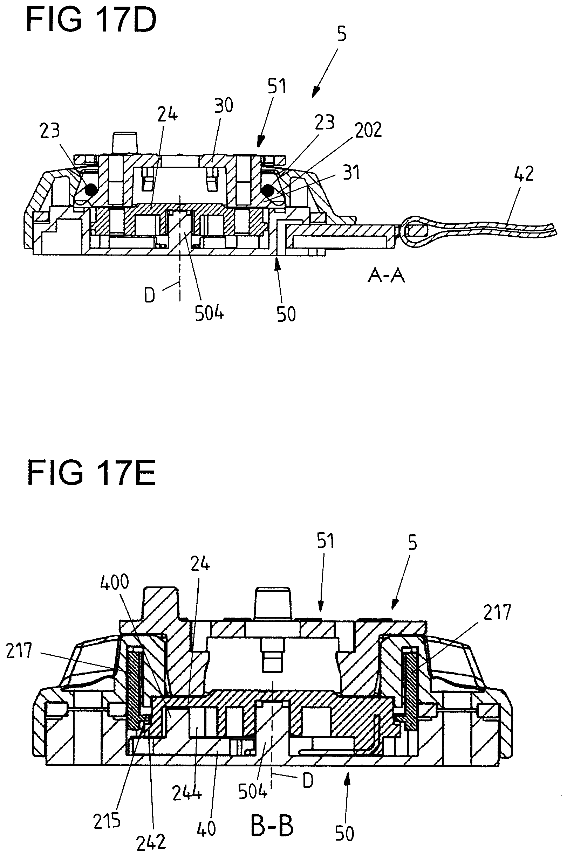

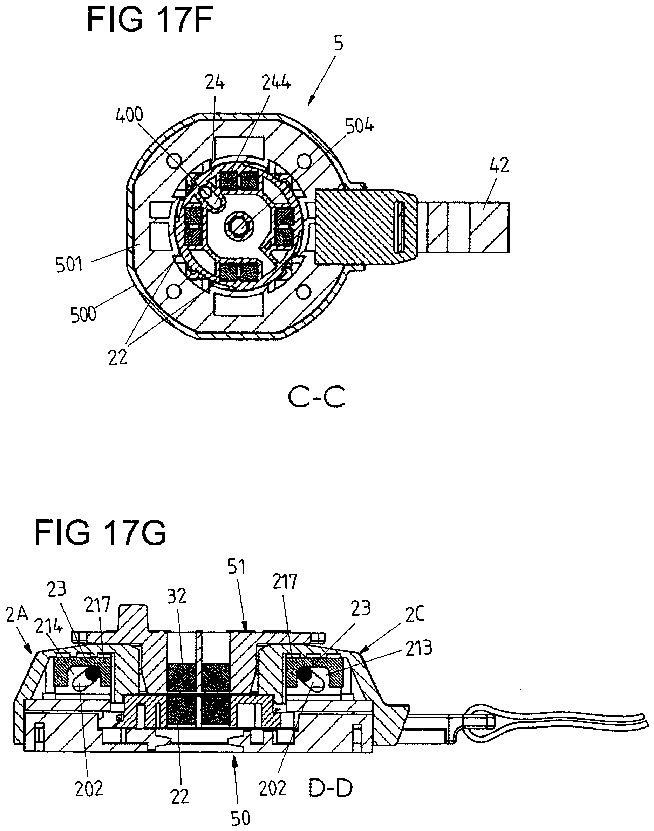

Fig. 17A bis 17G zeigen Ansichten der Verschlussbaugruppe 5 in der Schließstellung. In der Schließstellung befinden sich die Verriegelungselemente 23 in den zugeordneten Aufnahmeöffnungen 202 der Stützelemente 200 der Verriegelungsbaugruppe 25 in einer Stellung, die der Befestigungseinheit 51 angenähert ist. Aufgrund der schrägen Erstreckung der Aufnahmeöffnungen 202 sind die Verriegelungselemente 23 radial nach innen versetzt und befinden sich in Eingriff mit den Eingriffselementen 31 der Befestigungseinheiten 51, wie dies aus Fig. 17D ersichtlich ist. Über die Verschlussteile 2A-2D, 3A-3D ist somit eine Verriegelung zwischen den Befestigungseinheiten 50, 51 hergestellt.

Die Verriegelungselemente 23 sind magnetisch und werden durch magnetische Wechselwirkung mit den Magnetelementen 32 der Befestigungseinheit 51 selbsttätig in Eingriff mit den Eingriffselementen 31 gezogen, wie dies aus Fig. 17D ersichtlich ist.

In der Schließstellung sind die Schiebeelemente 217 gegenüber dem Wirkelement 24 in Richtung der Befestigungseinheit 51 angehoben, wie dies aus Fig. 17E ersichtlich ist. Die Schiebeelemente 217 sind nicht über das Wirkelement 24 belastet, das sich in einer nicht betätigten Drehstellung befindet.

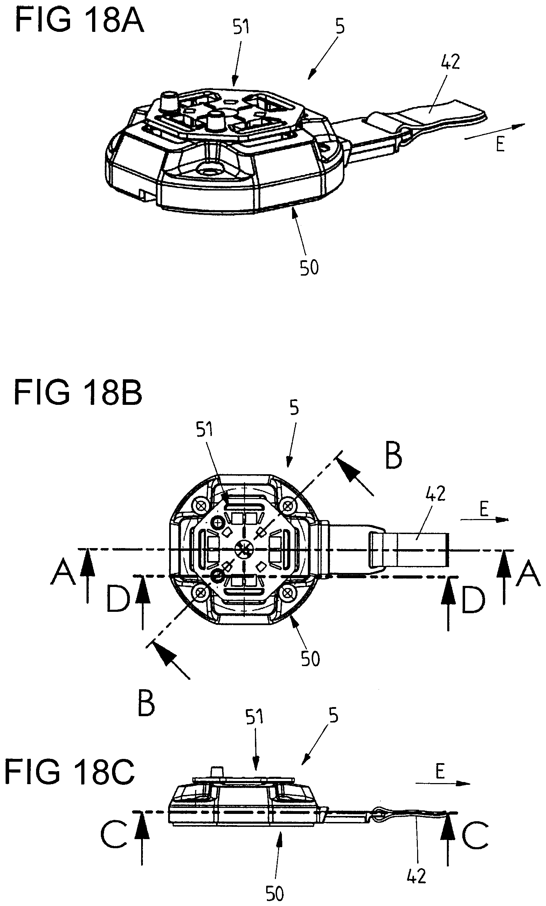

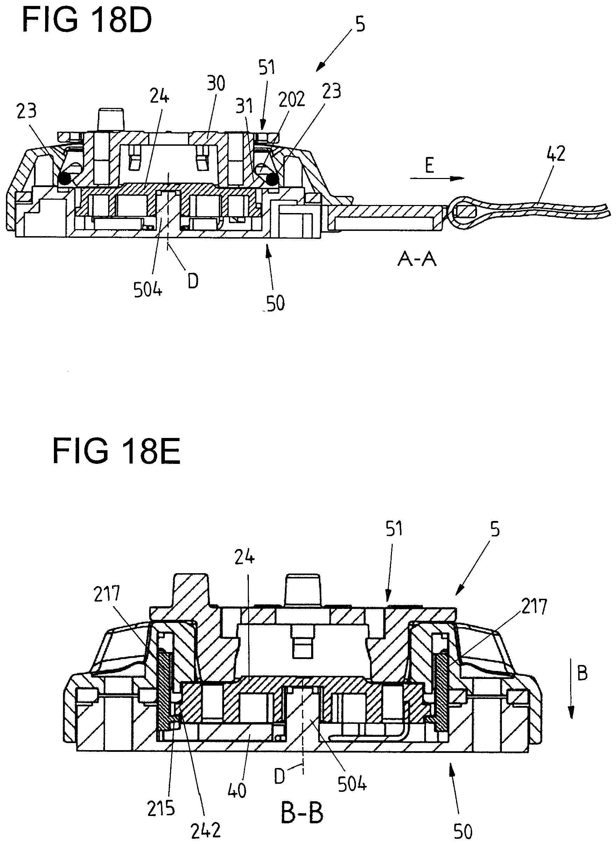

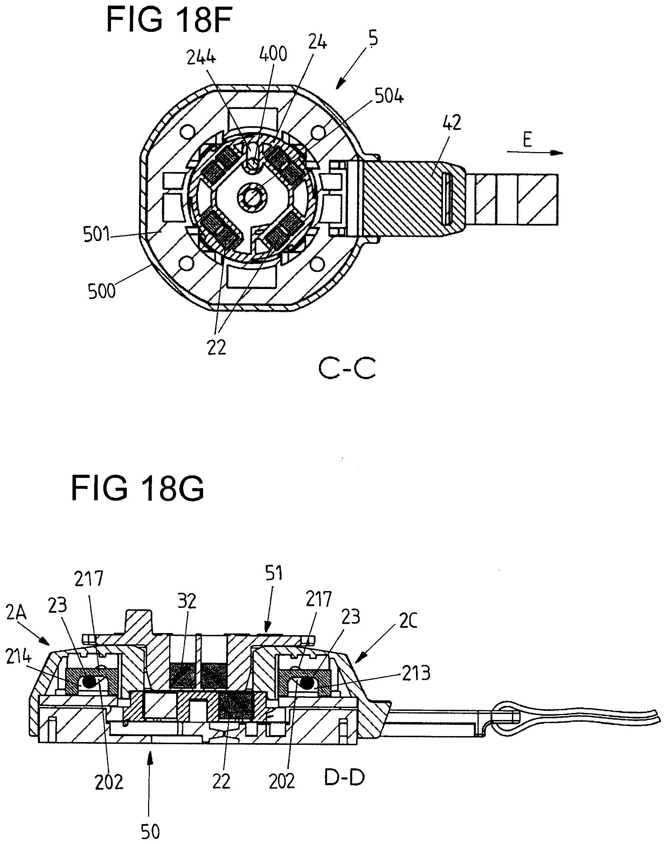

Zum Öffnen der Verschlussbaugruppe 5 wird das Betätigungselement 4 über den Griff 42 in die Entriegelungsrichtung E betätigt. Aufgrund der Kopplung des Betätigungselements 4 über das Kopplungselement 400 mit dem Wirkelement 24 wird das Wirkelement 24 um die Drehachse D verdreht, wie dies insbesondere aus Fig. 18F ersichtlich ist.

Dadurch wirkt das Wirkelement 24 auf die Schiebeelemente 217 ein, indem Führungseinrichtungen 242 des Wirkelements 24 auf Führungszapfen 215 an den Schiebeelementen 217 einwirken und die Schiebeelemente 217 dadurch in eine Betätigungsrichtung B nach unten ziehen, wie dies aus Fig. 18D ersichtlich ist. Die Verriegelungselemente 23 werden dadurch in den zugeordneten Aufnahmeöffnungen 202 der Verriegelungsbaugruppe 25 nach unten und außen verstellt, ersichtlich aus Fig. 18D und 18G, bewirkt durch die Kopplung der Schiebeelemente 217 mit den Verriegelungselementen 23 über die Lageöffnungen 213, 214.

Bei Betätigen des Wirkelements 24 werden die Magnetelemente 22 zudem gemeinsam mit dem Wirkelement 24 verdreht, sodass die Magnetelemente 22 aus ihrer Gegenüberlage mit den Magnetelementen 32 gebracht werden, wie dies aus Fig. 18G ersichtlich ist. Eine magnetische Anziehung zwischen den Befestigungseinheiten 50, 51 wird somit reduziert oder aufgehoben oder gar in eine Abstoßung umgekehrt.

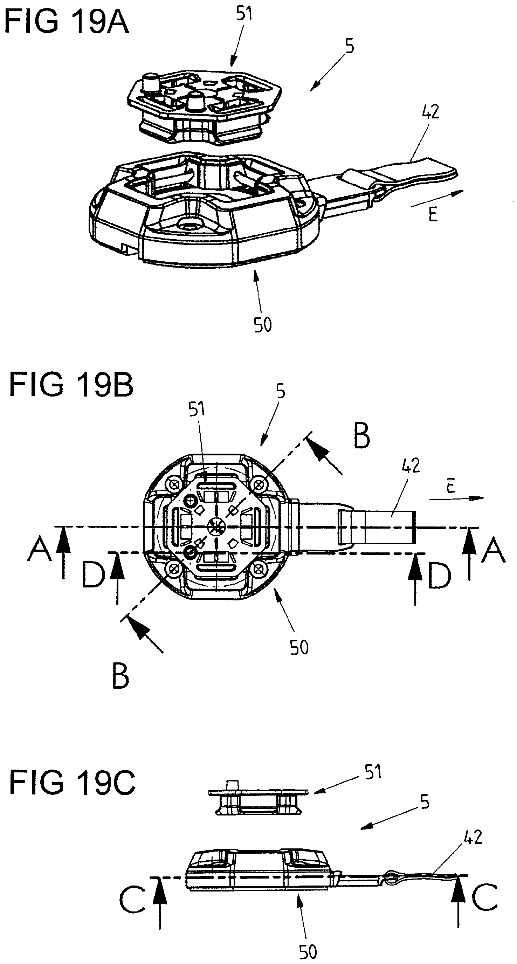

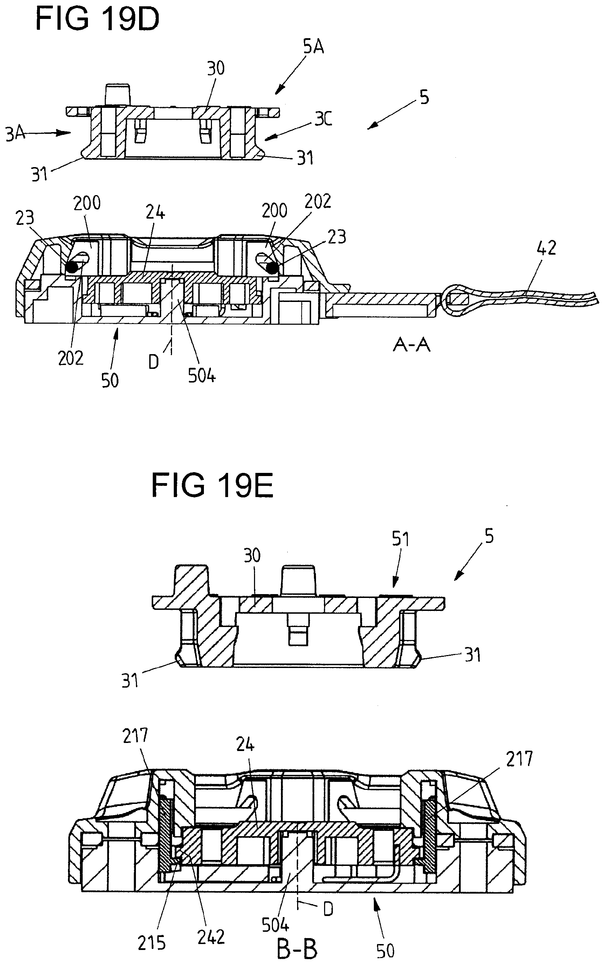

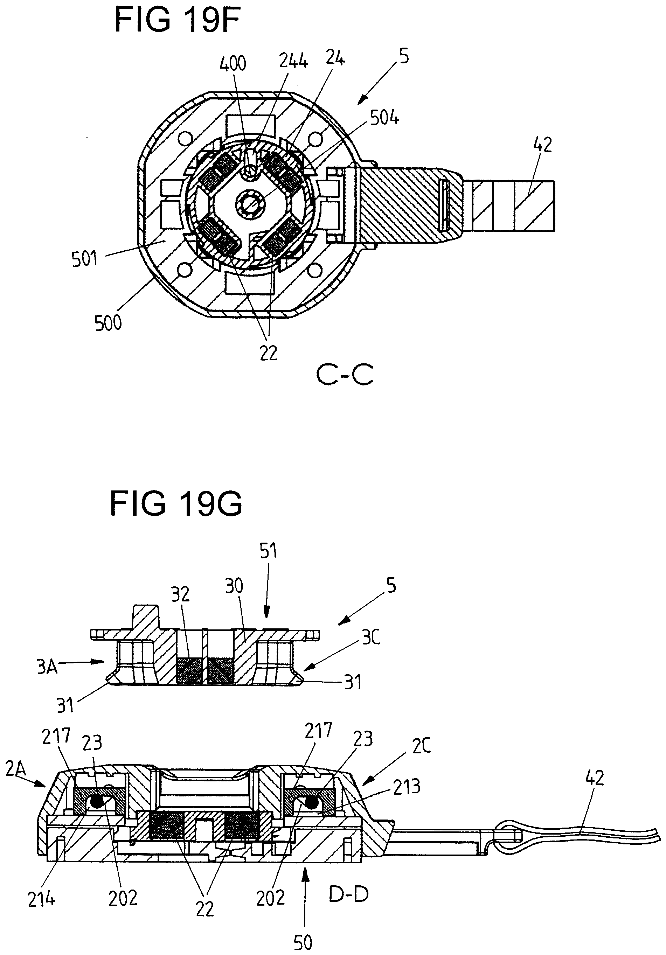

Die Befestigungseinheiten 50, 51 können, nach Entriegelung über das Betätigungselement 4, somit voneinander abgenommen werden, wie dies in Fig. 19A bis 19G dargestellt ist.

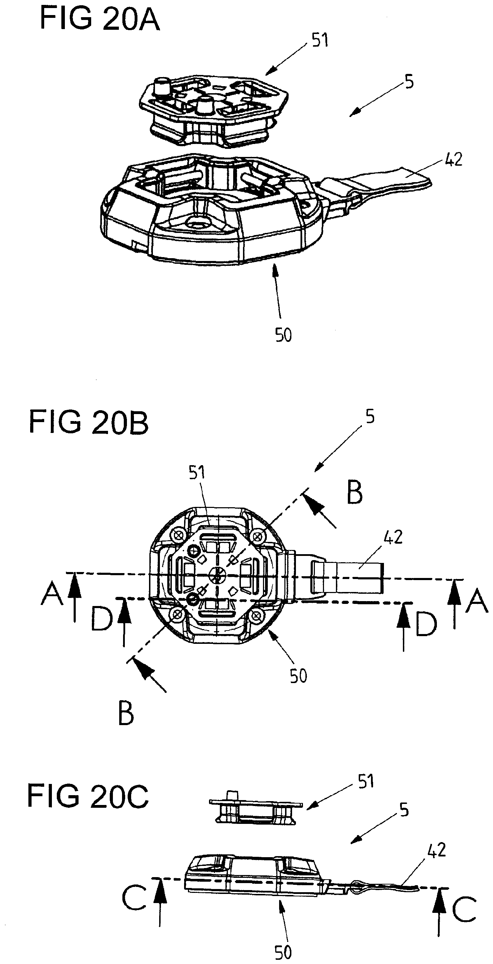

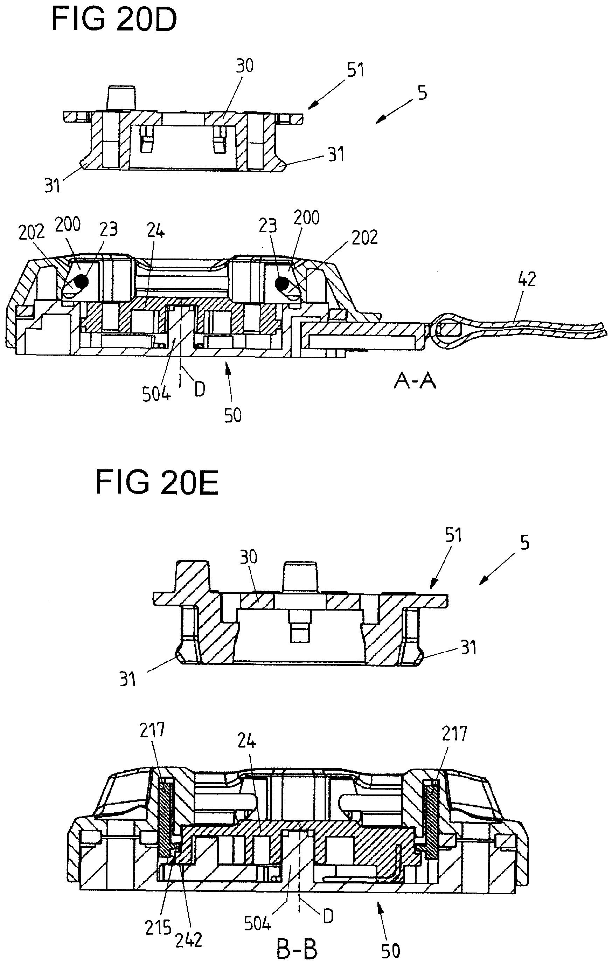

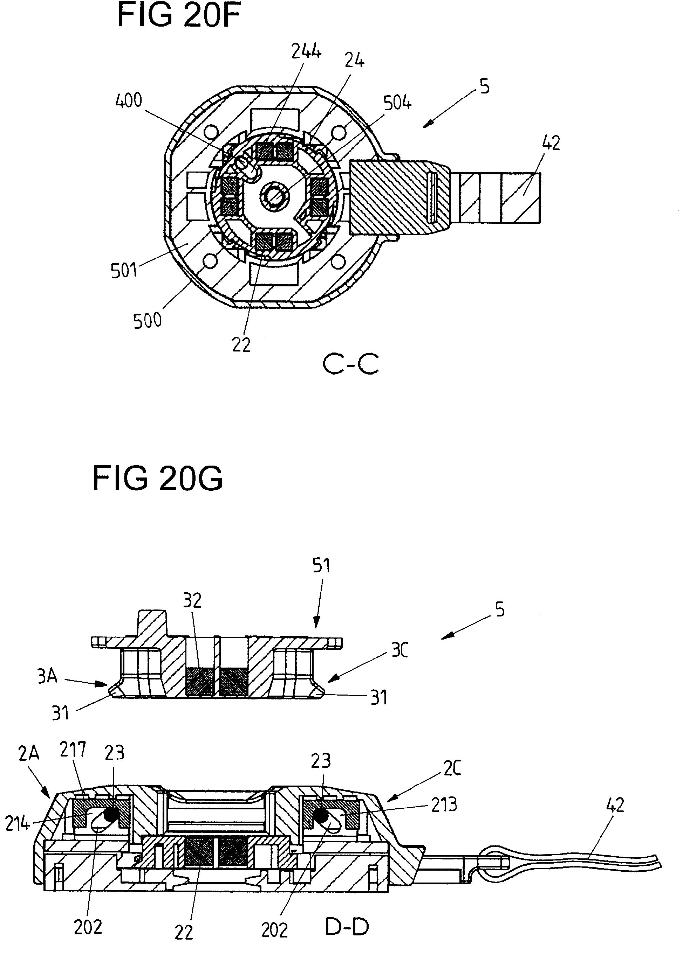

Nach dem Öffnen der Verschlussbaugruppe und nach dem Loslassen des Griffs 42 gelangt das Betätigungselement 4 zurück in seine nicht betätigte Stellung, dargestellt in Fig. 20A bis 20G, wobei dieses Zurückstellen des Betätigungselements 4 selbsttätig zum Beispiel durch Vorspannung eines Federelements 43 (siehe Fig. 14) erfolgt.

Die Verschlussbaugruppe 5 befindet sich somit in einer geöffneten Stellung. Durch erneutes Ansetzen der Befestigungseinheiten 50, 51 kann die Verschlussbaugruppe 5 wieder geschlossen werden.

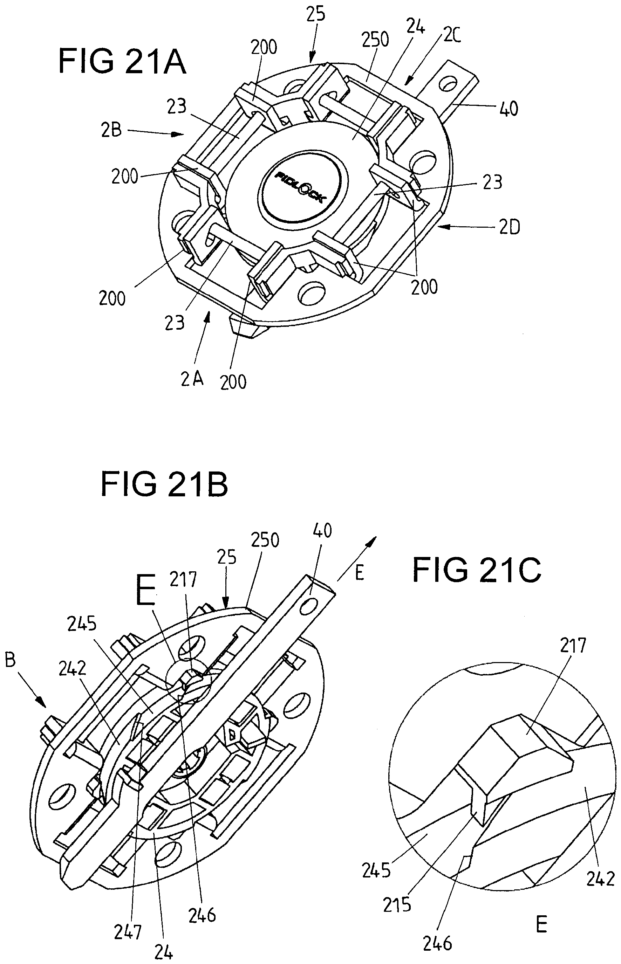

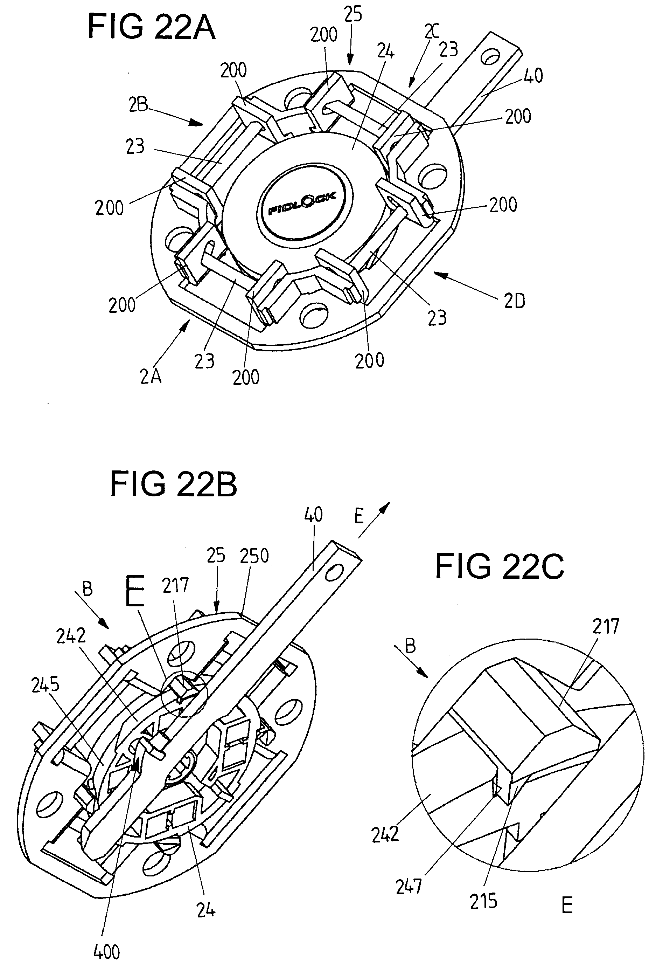

Fig. 21A-21C und Fig. 22A-22C zeigen gesonderte Ansichten der Verriegelungsbaugruppe 25 mit den daran angeordneten Verschlussteilen 2A-2D und dem Wirkelement 24.

An einem jeden Schiebeelement 217, die gemeinsam die Verstellteile 21 der Verschlussteile 2A-2D ausbilden, ist ein nach innen weisender Führungszapfen 215 geformt, der zum Zusammenwirken mit den Führungseinrichtungen 242 des Wirkelements 24 dient. Einem jeden Schiebeelement 217 ist hierbei eine Führungseinrichtung 242 am äußeren Umfang des Wirkelements 24 zugeordnet, sodass die Schiebeelemente 217 gemeinsam durch Verdrehen des Wirkelements 24 um die Drehachse D verdreht werden können.

Wie dies aus Fig. 21B und 21C sowie Fig. 22B und 22C ersichtlich ist, sind die Führungseinrichtungen 242 des Wirkelements 24 bei dem dargestellten Ausführungsbeispiel durch Auflaufschrägen 246, 247 geformt, die eine umfängliche Aussparung 245 des Wirkelements 24 begrenzen. Ein jedes Schiebeelement 217 liegt mit den Führungszapfen 215 in einer zugeordneten Aussparung 245 des Wirkelements 24 ein.

In der Schließstellung, entsprechend den Ansichten gemäß Fig. 21A bis 21C, sind die Schiebeelemente 217 entgegen der Betätigungsrichtung B zu dem Scheibenkörper 250 angehoben. Die Verriegelungselemente 23 befinden sich in einer angehoben, nach innen versetzten Stellung, ersichtlich aus Fig. 21A. In dieser Stellung liegen die Führungszapfen 215 an einer jeweils zugeordneten, ersten Auflaufschräge 246 an, wie dies aus Fig. 21B und 21C ersichtlich ist.

Die Schiebeelemente 217 werden hierbei durch die Auflaufschrägen 246 in der angehobenen Stellung gehalten. Zusätzlich oder alternativ werden die Schiebeelemente 217 mit den Verriegelungselementen 23 in die angehobene Stellung bewegt und dort gehalten. Die Verriegelungselemente 23 bewegen sich hierbei aufgrund magnetischer Wechselwirkung mit den Magnetelementen 22 an dem Wirkelement 24 in die obere, nach innen versetzte Verriegelungsstellung.

Wird das Wirkelement 24 zum Betätigen der Schiebeelemente 217 verdreht, wie dies aus Fig. 22A bis 22C ersichtlich ist, so gelangen die Führungszapfen 215 der Schiebeelemente 217 mit der jeweils zugeordneten Auflaufschräge 247 auf der anderen Seite der zugeordneten Aussparung 245 in Anlage und laufen auf diese Auflaufschräge 247 auf. Dadurch werden die Schiebeelemente 217 gemeinsam in die Betätigungsrichtung B verschoben und somit so verstellt, dass die Verriegelungselemente 23 in den zugeordneten Aufnahmeöffnungen der Stützelemente 200 nach unten und außen versetzt werden, wie dies aus Fig. 22A ersichtlich ist. Die Verriegelungselemente 23 werden auf diese Weise außer Eingriff von den zugeordneten Eingriffselementen 31 der Verschlussteile 3A-3D der Befestigungseinheit 51 gebracht, wie dies vorangehend erläutert worden ist.

Während bei dem Ausführungsbeispiel gemäß Fig. 1 bis 13 gesonderte Wirkelemente 24 für jedes Verschlussteil 2A-2D vorgesehen sind, ist bei dem Ausführungsbeispiel gemäß Fig. 14 bis 22A-22C ein gemeinsames Wirkelement 24 zum gemeinsamen Entriegeln sämtlicher Verriegelungselemente 23 der Verschlussteile 2A-2D vorgesehen. Funktional, insbesondere mit Blick auf die Verriegelung über die Verriegelungselemente 23 in Zusammenwirken mit den Eingriffselementen 31, sind die Ausführungsbeispiele ansonsten im Wesentlichen identisch, sodass mit Blick auf die Funktionalität des Ausführungsbeispiels gemäß Fig. 14 bis 22A-22C auch auf die Beschreibung zum Ausführungsbeispiel gemäß Fig. 1 bis 13 verwiesen wird.

Der der Erfindung zugrunde liegende Gedanke ist nicht auf die vorangehend geschilderten Ausführungsbeispiele beschränkt, sondern lässt sich auch in anderer Weise verwirklichen.

Eine Verschlussvorrichtung der beschriebenen Art kann in ganz unterschiedlicher Weise Verwendung finden.

So kann eine Verschlussbaugruppe zur Verbindung einer Baugruppe, zum Beispiel einer Tasche, mit einer übergeordneten Baugruppe, zum Beispiel einem Fahrzeug Verwendung finden. Beispielsweise kann über eine Verschlussbaugruppe eine Tasche an einem Tank eines Motorrads zu befestigen sein.

Eine Verschlussvorrichtung der beschriebenen Art kann zudem zum Verbinden eines elektronischen Geräts mit einer übergeordneten Baugruppe, zum Beispiel in oder an einem Fahrzeug, zum Beispiel einem Kraftfahrzeug oder Fahrrad, Verwendung finden. So kann über eine solche Vorrichtung beispielsweise ein Mobiltelefon an einem Armaturenbrett eines Kraftfahrzeugs oder an einer Lenkerstange eines Fahrrads (lösbar) festgelegt werden.

Die Verschlussvorrichtung kann aber auch zum Verbinden anderer Gegenstände miteinander, zum Beispiel als Verschluss für einen Helm, insbesondere Sporthelm, für eine Tasche oder für ein Kleidungsstück, Verwendung finden.

### Bezugszeichenliste

- 1, 1A-D: Verschlussvorrichtung
- 2, 2A-D: Verschlussteil
- 20: Körper
- 200: Stützelement
- 201: Schrägfläche
- 202: Aufnahmeöffnung
- 21: Verstellteil
- 210: Körperelement
- 211,212: Lagerarm
- 213, 214: Lageröffnung
- 215, 216: Führungselement (Führungszapfen)
- 217: Schiebeelement
- 22: Magneteinrichtung
- 23: Verriegelungselement
- 24: Wirkelement
- 240: Drehkörper
- 241: Montageöffnung
- 242: Führungseinrichtung
- 243: Verzahnung
- 244: Kopplungsöffnung
- 245: Aussparung
- 246, 247: Auflaufschräge
- 25: Verriegelungsbaugruppe
- 250: Körper
- 3, 3A-D: Verschlussteil
- 30: Basis
- 31: Eingriffselement
- 310: Eingriffsabschnitt
- 311: Schrägfläche
- 32: Magneteinrichtung
- 33: Befestigungsplatte
- 4: Betätigungselement
- 40: Verstellkörper
- 400: Kopplungselement (Kopplungszapfen)
- 41, 41A-D: Verzahnungsabschnitt
- 42: Griff
- 43: Federelement
- 5: Verschlussbaugruppe
- 50: Befestigungseinheit
- 500: Gehäuseteil
- 501: Deckel
- 502A-D: Lageraufnahme
- 503: Boden
- 504: Lagerelement (Lagerzapfen)
- 51: Befestigungseinheit
- A: Drehrichtung
- B: Betätigungsrichtung
- C: Betätigungsrichtung
- D: Drehachse
- E: Entriegelungsrichtung
- X: Schließrichtung

## Patentansprüche

1. Verschlussvorrichtung (1, 1A-1D), mit
einem einen Körper (20) aufweisenden ersten Verschlussteil (2, 2A-2D) und einem zweiten Verschlussteil (3, 3A-3D), die zum Schließen der Verschlussvorrichtung (1, 1A-1D) entlang einer Schließrichtung (X) aneinander ansetzbar und in einer Schließstellung miteinander verbunden sind, und
zumindest einem Verriegelungselement (23), das zu dem Körper (20) des ersten Verschlussteils (2, 2A-2D) verstellbar ist, und
zumindest einem Eingriffsabschnitt (310), der an dem zweiten Verschlussteil (3, 3A-3D) geformt ist, wobei das zumindest eine Verriegelungselement (23) und der zumindest eine Eingriffsabschnitt (310) in einer Schließstellung derart miteinander in Eingriff stehen, dass das erste Verschlussteil (2, 2A-2D) und das zweite Verschlussteil (3, 3A-3D) miteinander verriegelt sind,
wobei das erste Verschlussteil (2, 2A-2D) eine erste Magneteinrichtung (22) und das zweite Verschlussteil (3, 3A-3D) eine zweite Magneteinrichtung (32) aufweisen, wobei die erste Magneteinrichtung (22) und die zweite Magneteinrichtung (32) bei Ansetzen des ersten Verschlussteils (2, 2A-2D) und des zweiten Verschlussteils (3, 3A-3D) aneinander magnetisch anziehend zusammenwirken und das zumindest eine Verriegelungselement (23) derart magnetisch ausgebildet ist, dass das zumindest eine Verriegelungselement (23) in der Schließstellung durch die erste Magneteinrichtung (22) und/oder die zweite Magneteinrichtung (32) in Richtung eines Eingriffs mit dem zumindest einen Eingriffsabschnitt (310) belastet ist, wobei das erste Verschlussteil (2, 2A-2D) ein Verstellteil (21) und ein mit dem Verstellteil (21) wirkverbundenes, um eine Drehachse (D) drehbares Wirkelement (24) aufweist, wobei das Verstellteil (21) durch Verdrehen des Wirkelements (24) in eine Betätigungsrichtung (B) betätigbar ist, um das zumindest eine Verriegelungselement (23) zum Lösen des ersten Verschlussteils (2, 2A-2D) und des zweiten Verschlussteils (3, 3A-3D) voneinander außer Eingriff von dem zumindest einen Eingriffsabschnitt (310) zu bringen,
**dadurch gekennzeichnet, dass**
der Eingriffsabschnitt (310) eine schräg zur Schließrichtung (X) erstreckte, erste Schrägfläche (311) und das erste Verschlussteil (2, 2A-2D) eine schräg zur Schließrichtung (X) erstreckte, zweite Schrägfläche (201) aufweisen, wobei in der Schließstellung das zumindest eine Verriegelungselement (23) zwischen der ersten Schrägfläche (311) und der zweiten Schrägfläche (201) angeordnet ist.

2. Verschlussvorrichtung (1, 1A-1D) nach Anspruch 1, **dadurch gekennzeichnet, dass** die Drehachse (D) entlang der Schließrichtung (X) gerichtet ist.

3. Verschlussvorrichtung (1, 1A-1D) nach Anspruch 1 oder 2, **dadurch gekennzeichnet, dass** die Betätigungsrichtung (B) entlang der Drehachse (D) gerichtet ist.

4. Verschlussvorrichtung (1, 1A-1D) nach einem der Ansprüche 1 bis 3, **dadurch gekennzeichnet, dass** das Wirkelement (24) eine Führungseinrichtung (242) aufweist, an der das Verstellteil (21) derart geführt ist, dass das Verstellteil (21) bei Verdrehen des Wirkelements (24) in die Betätigungsrichtung (B) betätigt wird.

5. Verschlussvorrichtung (1, 1A-1D) nach Anspruch 4, **dadurch gekennzeichnet, dass** die Führungseinrichtung (242) durch eine Kulissenführung oder zumindest eine Auflaufschräge (246, 247) ausgebildet ist.

6. Verschlussvorrichtung (1) nach einem der vorangehenden Ansprüche, **dadurch gekennzeichnet, dass** das zumindest eine Verriegelungselement (23) verstellbar in einer Aufnahmeöffnung (202) des ersten Verschlussteils (2) aufgenommen ist.

7. Verschlussvorrichtung (1) nach Anspruch 6, **dadurch gekennzeichnet, dass** die Aufnahmeöffnung (202) derart schräg zur Schließrichtung (X) erstreckt ist, dass das zumindest eine Verriegelungselement (23) entlang einer schräg zur Schließrichtung (X) erstreckten Verstellrichtung in der Aufnahmeöffnung (202) verstellbar ist.

8. Verschlussvorrichtung (1, 1A-1D) nach einem der vorangehenden Ansprüche, **dadurch gekennzeichnet, dass** das zumindest eine Verriegelungselement (23) an dem Verstellteil (21) angeordnet ist.

9. Verschlussvorrichtung (1, 1A-1D) nach Anspruch 8, **dadurch gekennzeichnet, dass** das zumindest eine Verriegelungselement (23) in einer Lageröffnung (211, 212) des Verstellteils (21) an dem Verstellteil (21) aufgenommen und quer zur Schließrichtung (X) zu dem Verstellteil (21) verstellbar ist.

10. Verschlussvorrichtung (1, 1A-1D) nach einem der vorangehenden Ansprüche, **dadurch gekennzeichnet, dass** die erste Schrägfläche (311) und die zweite Schrägfläche (201) in einer durch die Schließrichtung (X) und eine Querrichtung (Q) aufgespannten Ebene parallel oder unter einem Winkel größer Null oder kleiner Null zueinander angeordnet sind.

11. Verschlussvorrichtung (1, 1A-1D) nach einem der vorangehenden Ansprüche, **dadurch gekennzeichnet, dass** das zumindest eine Verriegelungselement (23) als längserstrecktes Stabelement ausgebildet ist.

12. Verschlussvorrichtung (1, 1A-1D) nach einem der vorangehenden Ansprüche, **dadurch gekennzeichnet, dass** die erste Magneteinrichtung (22) an dem Wirkelement (24) angeordnet und gemeinsam mit dem Wirkelement (24) verdrehbar ist.

13. Verschlussvorrichtung (1, 1A-1D) nach einem der vorangehenden Ansprüche, **dadurch gekennzeichnet, dass** bei Verdrehen des Wirkelements (24) aus einer der Schließstellung zugeordneten Drehstellung eine magnetische Anziehungskraft zwischen der ersten Magneteinrichtung (22) und der zweiten Magneteinrichtung (32) abgeschwächt wird.

14. Verschlussvorrichtung (1, 1A-1D) nach einem der vorangehenden Ansprüche, **dadurch gekennzeichnet, dass** das zweite Verschlussteil (3, 3A-3D) eine Basis (30) aufweist, an der der zumindest eine Eingriffsabschnitt (310) angeordnet ist.

15. Verschlussbaugruppe (5), mit einer Mehrzahl von Verschlussvorrichtungen (1, 1A-1D) nach einem der vorangehenden Ansprüche.

## Claims

1. Closure device (1, 1A-1D) having
a first closure part (2, 2A-2D) which has a body (20), and a second closure part (3, 3A-3D), said first closure part (2, 2A-2D) and said second closure part (3, 3A-3D) for closing the closure device (1, 1A-1D) being able to be placed against one another along a closing direction (X) and in a closing position being connected to one another; and
at least one locking element (23) which is adjustable in relation to the body (20) of the first closure part (2, 2A-2D); and
at least one engagement portion (310) which is shaped on the second closure part (3, 3A-3D), wherein the at least one locking element (23) and the at least one engagement portion (310) in a closing position are mutually engaged in such a manner that the first closure part (2, 2A-2D) and the second closure part (3, 3A-3D) are locked to one another,
wherein the first closure part (2, 2A-2D) has a first magnetic installation (22), and the second closure part (3, 3A-3D) has a second magnetic installation (32), wherein the first magnetic installation (22) and the second magnetic installation (32) when placing the first closure part (2, 2A-2D) and the second closure part (3, 3A-3D) against one another interact in a magnetically attractive manner, and the at least one locking element (23) is magnetically configured in such a manner that the at least one locking element (23) in the closing position by way of the first magnetic installation (22) and/or the second magnetic installation (32) is loaded in the direction of engaging with the at least one engagement portion (310), wherein the first closure part (2, 2A-2D) has an adjustment part (21) and an operative element (24) which is operatively connected to the adjustment part (21) and is rotatable about a rotation axis (D), wherein the adjustment part (21) by rotating the operative element (24) is activatable in an activation direction (B) so as to bring the at least one locking element (23) to disengage from the at least one engagement portion (310) in order for the first closure part (2, 2A-2D) and the second closure part (3, 3A-3D) to be released from one another,
**characterized in that**
the engagement portion (310) has a first oblique face (311) which extends obliquely to the closing direction (X), and the first closure part (2, 2A-2D) has a second oblique face (201) which extends obliquely to the closing direction (X), wherein the at least one locking element (23) in the closing position is disposed between the first oblique face (311) and the second oblique face (201).

2. Closure device (1, 1A-1D) according to Claim 1, **characterized in that** the rotation axis (D) is directed along the closing direction (X).

3. Closure device (1, 1A-1D) according to Claim 1 or 2, **characterized in that** the activation direction (B) is directed along the rotation axis (D).

4. Closure device (1, 1A-1D) according to one of Claims 1 to 3, **characterized in that** the operative element (24) has a guiding installation (242) on which the adjustment part (21) is guided in such a manner that the adjustment part (21) when rotating the operative element (24) is activated in the activation direction (B).

5. Closure device (1, 1A-1D) according to Claim 4, **characterized in that** the guiding installation (242) is configured by a gate guide or at least one ramp (246, 247).

6. Closure device (1) according to one of the preceding claims, **characterized in that** the at least one locking element (23) is received so as to be adjustable in a receptacle opening (202) of the first closure part (2).

7. Closure device (1) according to Claim 6, **characterized in that** the receptacle opening (202) in relation to the closing direction (X) extends obliquely in such a manner that the at least one locking element (23) in the receptacle opening (202) is adjustable along an adjustment direction which extends obliquely to the closing direction (X).

8. Closure device (1, 1A-1D) according to one of the preceding claims, **characterized in that** the at least one locking element (23) is disposed on the adjustment part (21).

9. Closure device (1, 1A-1D) according to Claim 8, **characterized in that** the at least one locking element (23) on the adjustment part (21) is received in a bearing opening (211, 212) of the adjustment part (21) and in relation to the adjustment part (21) is adjustable transversely to the closing direction (X).

10. Closure device (1, 1A-1D) according to one of the preceding claims, **characterized in that** the first oblique face (311) and the second oblique face (201) in a plane which is spanned by the closing direction (X) and a transverse direction (Q) are disposed parallel or at an angle which is greater than zero or less than zero..

11. Closure device (1, 1A-1D) according to one of the preceding claims, **characterized in that** the at least one locking element (23) is configured as an elongate bar element.

12. Closure device (1, 1A-1D) according to one of the preceding claims, **characterized in that** the first magnetic installation (22) is disposed on the operative element (24) and is rotatable conjointly with the operative element (24).

13. Closure device (1, 1A-1D) according to one of the preceding claims, **characterized in that,** when rotating the operative element (24) from a rotary position assigned to the closing position, a magnetic pull between the first magnetic installation (22) and the second magnetic installation (32) is weakened.

14. Closure device (1, 1A-1D) according to one of the preceding claims, **characterized in that** the second closure part (3, 3A-3D) has a base unit (30) on which the at least one engagement portion (310) is disposed.

15. Closure assembly (5) having a plurality of closure devices (1, 1A-1D) according to one of the preceding claims.

## Revendications

1. Dispositif de fermeture (1, 1A - 1D), avec
une première partie de fermeture (2, 2A - 2D) présentant un corps (20) et une deuxième partie de fermeture (3, 3A - 3D), qui peuvent être placées l'une sur l'autre pour fermer le dispositif de fermeture (1, 1A - 1D) le long d'une direction de fermeture (X) et sont reliées l'une à l'autre dans une position de fermeture, et
au moins un élément de verrouillage (23), qui peut être ajusté par rapport au corps (20) de la première partie de fermeture (2, 2A - 2D), et
au moins une section de prise (310), qui est formée sur la deuxième partie de fermeture (3, 3A - 3D), dans lequel l'au moins un élément de verrouillage (23) et l'au moins une section de prise (310) sont en prise l'un avec l'autre dans une position de fermeture de telle manière que la première partie de fermeture (2, 2A - 2D) et la deuxième partie de fermeture (3, 3A - 3D) sont verrouillées l'une à l'autre,
dans lequel la première partie de fermeture (2, 2A - 2D) présente un premier système magnétique (22) et la deuxième partie de fermeture (3, 3A - 3D) présente un deuxième système magnétique (32), dans lequel le premier système magnétique (22) et le deuxième système magnétique (32) coopèrent de manière à s'attirer l'un l'autre magnétiquement lors du placement de la première partie de fermeture (2, 2A - 2D) et de la deuxième partie de fermeture (3, 3A - 3D) et l'au moins un élément de verrouillage (23) est réalisé de manière magnétique de telle manière que l'au moins un élément de verrouillage (23) est chargé dans la position de fermeture par le premier système magnétique (22) et/ou le deuxième système magnétique (32) en direction d'une prise avec l'au moins une section de prise (310), dans lequel la première partie de fermeture (2, 2A - 2D) présente une partie d'ajustement (21) et un élément actif (24) pouvant tourner autour d'un axe de rotation (D), interagissant avec la partie d'ajustement (21), dans lequel la partie d'ajustement (21) peut être actionnée par torsion de l'élément actif (24) dans une direction d'actionnement (B) pour dégager l'au moins un élément de verrouillage (23) de l'au moins une section de prise (310) pour détacher la première partie de fermeture (2, 2A - 2D) et la deuxième partie de fermeture (3, 3A - 3D) l'une de l'autre,
**caractérisé en ce que**
la section de prise (310) présente une première surface oblique (311) s'étendant de manière oblique par rapport à la direction de fermeture (X) et la première partie de fermeture (2, 2A - 2D) présente une deuxième surface oblique (201) s'étendant de manière oblique par rapport à la direction de fermeture (X), dans lequel l'au moins un élément de verrouillage (23) est disposé, dans la position de fermeture, entre la première surface oblique (311) et la deuxième surface oblique (201).

2. Dispositif de fermeture (1, 1A - 1D) selon la revendication 1, **caractérisé en ce que** l'axe de rotation (D) est dirigé le long de la direction de fermeture (X).

3. Dispositif de fermeture (1, 1A - 1D) selon la revendication 1 ou 2, **caractérisé en ce que** la direction d'actionnement (B) est dirigée le long de l'axe de rotation (D).

4. Dispositif de fermeture (1, 1A - 1D) selon l'une quelconque des revendications 1 à 3, **caractérisé en ce que** l'élément actif (24) présente un système de guidage (242), sur lequel la partie d'ajustement (21) est guidée de telle manière que la partie d'ajustement (21) est actionnée lors de la torsion de l'élément actif (24) dans la direction d'actionnement (B).

5. Dispositif de fermeture (1, 1A - 1D) selon la revendication 4, **caractérisé en ce que** le système de guidage (242) est réalisé par un guidage à coulisse ou au moins un plan incliné (246, 247).

6. Dispositif de fermeture (1) selon l'une quelconque des revendications précédentes, **caractérisé en ce que** l'au moins un élément de verrouillage (23) est logé de manière à pouvoir être ajusté dans une ouverture de logement (202) de la première partie de fermeture (2).

7. Dispositif de fermeture (1) selon la revendication 6, **caractérisé en ce que** l'ouverture de logement (202) s'étend de manière oblique par rapport à la direction de fermeture (X) de telle manière que l'au moins un élément de verrouillage (23) peut être ajusté le long d'une direction d'ajustement s'étendant de manière oblique par rapport à la direction de fermeture (X) dans l'ouverture de logement (202).

8. Dispositif de fermeture (1, 1A - 1D) selon l'une quelconque des revendications précédentes, **caractérisé en ce que** l'au moins un élément de verrouillage (23) est disposé sur la partie d'ajustement (21).

9. Dispositif de fermeture (1, 1A - 1D) selon la revendication 8, **caractérisé en ce que** l'au moins un élément de verrouillage (23) est logé dans une ouverture de montage (211, 212) de la partie d'ajustement (21) sur la partie d'ajustement (21) et peut être ajusté de manière transversale par rapport à la direction de fermeture (X) en direction de la partie d'ajustement (21).

10. Dispositif de fermeture (1, 1A - 1D) selon l'une quelconque des revendications précédentes, **caractérisé en ce que** la première surface oblique (311) et la deuxième surface oblique (201) sont disposées dans un plan formé par la direction de fermeture (X) et la direction transversale (Q), de manière parallèle ou selon un angle supérieur à 0 ou inférieur à 0 l'une par rapport à l'autre.

11. Dispositif de fermeture (1, 1A - 1D) selon l'une quelconque des revendications précédentes, **caractérisé en ce que** l'au moins un élément de verrouillage (23) est réalisé en tant qu'élément de barreau étiré en longueur.

12. Dispositif de fermeture (1, 1A - 1D) selon l'une quelconque des revendications précédentes, **caractérisé en ce que** le premier système magnétique (22) est disposé sur l'élément actif (24) et peut être tourné conjointement avec l'élément actif (24).

13. Dispositif de fermeture (1, 1A - 1D) selon l'une quelconque des revendications précédentes, **caractérisé en ce que** lors de la torsion de l'élément actif (24) depuis une position de rotation associée à la position de fermeture, une force d'attraction magnétique entre le premier système magnétique (22) et le deuxième système magnétique (32) est affaiblie.

14. Dispositif de fermeture (1, 1A - 1D) selon l'une quelconque des revendications précédentes, **caractérisé en ce que** la deuxième partie de fermeture (3, 3A - 3D) présente une base (30), sur laquelle est disposée l'au moins une section de prise (310).

15. Module de fermeture (5) avec une multitude de dispositifs de fermeture (1, 1A - 1D) selon l'une quelconque des revendications précédentes.
